(19) Europäisches Patentamt
European Patent Office
Office européen des brevets

(11) **EP 2 070 552 A1**

(12) **EUROPEAN PATENT APPLICATION**

(43) Date of publication:
**17.06.2009 Bulletin 2009/25**

(51) Int Cl.:
*A61L 2/18* *(2006.01)*      *A01N 25/30* *(2006.01)*
*A01N 31/02* *(2006.01)*      *A01N 59/00* *(2006.01)*
*C11D 3/00* *(2006.01)*      *A61L 101/02* *(2006.01)*
*A61L 101/34* *(2006.01)*      *A61L 101/44* *(2006.01)*

(21) Application number: **07023996.7**

(22) Date of filing: **11.12.2007**

(84) Designated Contracting States:
**AT BE BG CH CY CZ DE DK EE ES FI FR GB GR
HU IE IS IT LI LT LU LV MC MT NL PL PT RO SE
SI SK TR**
Designated Extension States:
**AL BA HR MK RS**

(71) Applicant: **Bundesrepublik Deutschland vertreten
durch das
Bundesminsterium für Gesundheit, dieses vertr.
durch das Robert-Koch-Institut
13353 Berlin (DE)**

(72) Inventors:
• **Mielke, Martin**
  **14193 Berlin (DE)**
• **Lemmer, Karin**
  **12105 Berlin (DE)**
• **Beekes, Michael**
  **14612 Falkensee (DE)**

(74) Representative: **Engelhard, Markus**
  **Forrester & Boehmert**
  **Pettenkoferstrasse 20-22**
  **80336 München (DE)**

(54) **A formulation for broad-range disinfection including prion decontamination**

(57)      The present invention relates to a formulation for broad-range disinfection including prion decontamination, uses thereof, to a kit and to a method for prion decontaminating and/or disinfecting an object.

**Description**

The present invention relates to a formulation for broad-range disinfection including prion decontamination, uses thereof, to a kit and to a method for prion decontamination and/or disinfection of objects.

Transmissible spongiform encephalopathies (TSEs) such as Creutzfeldt-Jakob disease (CJD) and its variant form (vCJD) in humans, bovine spongiform encephalopathy (BSE) in cattle and scrapie in sheep are invariably fatal neurodegenerative diseases of the central nervous system. The agents that cause TSEs are widely believed to represent a unique biological principle of infection. According to the prion hypothesis (Prusiner, S. B. (1982). Science 216, 136-144; Prusiner, S. B. (1998). Proc Natl Acad Sci USA 95, 13363-13383), TSE agents (so-called proteinaceous infectious particles or prions) consist essentially - if not entirely - of a misfolded form of the prion protein (PrP), which is known as PrP$^{Sc}$ and derived from a host-encoded cellular precursor (PrP$^C$). Although the exact molecular nature of TSE agents remains to be determined, there is substantial evidence that PrP$^{Sc}$ (or its protease-resistant core, PrP27-30) provides a practical biochemical marker for these pathogens (Wadsworth, J. D. F., Joiner, S., Hill, A. F., Campbell, T. A., Desbruslais, M., Luthert, P. J. & Collinge, J. (2001). Lancet 358, 171-180; Beekes, M. B. & McBride, P.A. (2007). FEBS Journal 274, 588-605). Following the emergence of BSE and vCJD, substantial evidence has accumulated that the latter can most likely be attributed to transmission, presumably via contaminated food, of BSE from cattle to man. The countermeasures implemented in response to the BSE epidemic are expected to prevent effectively further spread of this disease to humans, thereby minimizing the risk of new primary vCJD infections. However, additional challenges for public health in the context of TSEs arises from the hypothetical as well as the established risks of human-to-human transmission of vCJD and classical CJD, respectively (Beekes, M., Mielke, M., Pauli, G., Baier, M. & Kurth, R. (2004) In Prions. A Challenge for Science, Medicine and the Public Health System. Contributions to Microbiology, vol. 11, pp. 117-135. Edited by H. F. Rabenau, J. Ciantl & H. W. Doerr. Basel: Karger; Llewelyn, C. A., Hewitt, P. E., Knight, R. S., Amar, K., Cousens, S., Mackenzie, J. & Will, R. G. (2004). Lancet 363, 411-412). The experience with iatrogenic CJD, of which 267 cases were reported until July 2000 (Brown, P., Preece, M., Brandel, J. P. & 12 other authors 2000. Iatrogenic Creutzfeldt-Jakob disease at the millennium. Neurology 55, 1075-1081), and the detection of infectivity or PrP$^{Sc}$ in a variety of tissues from vCJD patients in addition to the brain and spinal cord (e.g. lymphatic system and peripheral nervous system) have led to the formulation of national and international recommendations and guidelines aiming at the prevention of iatrogenic transmission of these diseases (Simon, D. & Pauli, G. (1998). Bundesgesundheitsblatt 7, 297-285; World Health Organization, (1999) WHO Infection Control Guidelines for Transmissible Spongiform Encephalopathies. Report of a WHO consultation, Geneva, Switzerland, 23-26 March. WHO/CDS/CSR/APH/2000.3; Abschlussbericht der Task Force vCJK, (2002). Die Variante der Creutzfeldt-Jakob-Krankheit (vCJK). Bundesgesundheitsblatt Gesundheitsforschung Gesundheitsschutz 45, 376-394).

In order to prevent human-to-human transmission, it is of utmost importance to avoid the spread of TSE infectivity via surgical instruments by effective and safe decontamination (e.g. cleaning, chemical disinfection, sterilization; Beekes, M., Mielke, M., Pauli, G., Baier, M. & Kurth, R. (2004) In Prions. A Challenge for Science, Medicine and the Public Health System. Contributions to Microbiology, vol. 11, pp. 117-135. Edited by H. F. Rabenau, J. Ciantl & H. W. Doerr. Basel: Karger; Sehulster, L. M. (2004). Infect Control Hosp Epidemiol 25, 276-297). This is highlighted by the fact that PrP$^{Sc}$ has also been detected in various tissues including skeletal muscles of CJD patients (Glatzel, M., Abela, E. Maissen, M. & Aguzzi, A. (2003) N Engl J Med 349, 1812-1820.) and is present in lymphatic tissues, and possibly blood, during preclinical phases of vCJD incubation (Hilton, D. A., Fathers, E, Edwards, P., Ironside, J. W. & Zajicek, J (1998). Lancet 352, 703-704. Hilton, D. A., Ghani, A. C., Conyers, L, Edwards, P., McCardle, L., Penney, M., Ritchie, D. & Ironside, J. W. (2002). BMJ 325, 633-634); Llewelyn, C. A., Hewitt, P. E., Knight, R. S., Amar, K., Cousens, S., Mackenzie, J. & Will, R. G. (2004). Lancet 363, 411-412).

The high resistance of TSE agents to conventional methods of chemical or thermal inactivation and to UV- or ionizing radiation, as well as their high binding affinity to and tenacity on steel surfaces, warrant specific decontamination procedures in the reprocessing of surgical instruments. Treatments that are considered appropriate for decontamination include use of 1-2 M NaOH solution (for 24 h), 2.5-5% NaOCl solution (for 24 h) as well as 3, 4 or 6 M Guanidine thiocyanate (GdnSCN) solution (for 24 h, 1 h or 15 min, respectively) followed by steam sterilization at 134°C for 18 min to 1 h (Simon, D. & Pauli, G. (1998). Bundesgesundheitsblatt 7, 297-285; World Health Organization, (1999) WHO Infection Control Guidelines for Transmissible Spongiform Encephalopathies. Report of a WHO consultation, Geneva, Switzerland, 23-26 March. WHO/CDS/CSR/APH/2000.3; Hörnlimann, B., Pauli, G., Harbarth, S., Widmer, H.-R. & Simon, D. (2001) In Prionen und Prionenkrankheiten, pp. 415-442. Edited by B. Hörnlimann, D. Riesner & H. Kretzschmar. Berlin, New York: de Gruyter). Such stringent conditions, which are mandatory for the reprocessing of non-disposable instruments used in patients with known CJD/vCJD (or those with a recognizable risk of it), are hazardous to both equipment and operators, therefore they do not offer an option for the routine maintenance of surgical instruments (used on patients without a recognizable risk of human TSE). Here, generally applicable decontamination strategies that take into account the theoretical risk of CJD and vCJD transmission from asymptomatic carriers on the one hand, without compromising the conventional processes for cleaning, disinfection and sterilization on the other, are required.

In a recent publication (Lemmer et al., 2004, Journal of General Virology, 85, 3805-3816), the authors have reported on a number of formulations which exert potent decontaminating activities on PrP$^{Sc}$/PrP27-30 attached to steel surfaces. These formulations included a commercially available alkaline cleaner, a disinfectant containing 0.2% peracetic acid and low concentrations of NaOH (pH 8.9) or 5% SDS (pH 7.1,) and a formulation containing 0.2% SDS/0.3% (0.075 M) NaOH (pH 12.8). The authors used an in-vitro-assay to assess the detailed decontamination activities exerted by the different reagents on the pathological prion protein PrP$^{Sc}$. In this assay, steel wires were contaminated with 263K scrapie brain homogenate from hamsters and reprocessed for decontamination by exposure to several different test reagents. Residual contamination with PrP$^{Sc}$ or its protease-resistant core PrP27-30, still present after reprocessing on the wire surface or in the cleaning solution, was monitored by sensitive Western-Blot detection without or after proteinase K digestion. The amount of PrP$^{Sc}$ bound to the surface of steel wires after incubation in scrapie brain homogenate can be assessed by comparing the intensity of PrP-immuno-staining displayed by eluates from contaminated wires with Western-Blot signals from internal PrP27-30 standards. In this assay, the efficacy of the decontamination of steel wires by various test reagents can be assessed by comparing the initial load of contamination with the amount of total PrP and PrP27-30 residually attached to the carriers or released into the cleaning solution after processing.

This analytical approach also sheds light on the active principles potentially underlying the effects of the different reagents (degradation, detachment or destabilization of PrP$^{Sc}$). (i) If PrP could be detected only in substantially reduced amounts, or not at all, on the steel wires and in the cleaning solution without proteinase K (PK) treatment, this indicated degradation of the normal as well as the pathological prion protein; (ii) if PrP was found in the cleaning solution without or after PK treatment, the protein was at least in part detached from the wire surface; (iii) if prion protein visible in the Western-Blot prior to PK treatment was markedly reduced in its amount or completely disappeared upon digestion with PK, this showed that the respective test reagent destabilized the protease-resistant core of PrP$^{Sc}$ molecules in that it made this core more susceptible to enzymatic degradation. The results of this study showed that the aforementioned test formulations show good decontaminating activities on PrP$^{Sc}$/PrP27-30 attached to steel surfaces.

The secondary, tertiary and aggregation structures of PrP$^{Sc}$ appear to be very important for the resistance against the inactivation of prions. Certain chaotropic salts such as guanidine hydrochloride or guanidine thiocyanate lead to the destruction of hydrogen bonds within polypeptide secondary structures. Hence, chaotropic salts that exert destabilizing effects on the overall structure of PrP$^{Sc}$ can contribute to the inactivation of prions.

Alkaline conditions interfere with hydrogen bonds in proteins and can thereby destabilize the secondary structure of proteins. Furthermore, alkaline hydrolysis, possibly facilitated by previous alkaline disintegration of secondary structure elements such as beta-sheets, may degrade proteins.

Acids with pH values below 3 lead to the neutralization of glutamate and aspartate which, in turn, leads to the removal of salt bridges between different segments of the peptide chain and thus to the destabilization of the tertiary and/or aggreagation structure. However, an acid inactivation of prions appears to be effective only at high concentrations of acid or high temperature.

On the contrary, alcohols are commonly thought to add to the stability of the structure in many proteins. In the case of PrP$^{Sc}$, alcohols generally seem to add to the stabilization and fixation of PrP$^{Sc}$/PrP27-30 molecules.

Detergents affect the tertiary structure of proteins, in that they interact with hydrophilic and hydrophobic areas of the protein molecule and loosen the hydrophobic core of the protein molecule.

Taken together, an ideal disinfectant should have i) no protein fixating effects and ii) a fast, highly-efficient decontaminating/inactivating activity on a broad range of bacteria and viruses, vegetative forms of fungi, as well as on prions. Furthermore it should be harmless to the user as well as to the object which is to be decontaminated. Consequently, it was an aim of the present invention to provide for a formulation that would be effective both as a decontaminating formulation against prions and as a disinfectant against bacteria (including mycobacteria) and enveloped as well as non-enveloped viruses. Moreover, it was an aim of the present invention to provide for a material- and device-friendly formulation that can be routinely used in an easy manner.

All these objects are solved by an aqueous formulation comprising:

 a) a detergent ,
 b) an alkali hydroxide,
 c) an alcohol, preferably having 1 to 4 C-atoms, and
 d) water as a solvent.

In one embodiment said detergent is an anionic detergent, wherein preferably said anionic detergent is selected from the group comprising alkali-($C_1$-$C_{18}$)alkyl sulphates, in particular sodium dodecyl sulphate (SDS), ($C_1$-$C_{18}$)alkyl benzenesulfonates, ($C_1$-$C_{18}$)alkyl sulphonates, ($C_1$-$C_{18}$)alkyl phosphates and mixtures thereof.

In one embodiment said detergent, preferably said anionic detergent, is present in said formulation in an amount in the range of from 0.1% (w/v) to 1.0% (w/v) with reference to the formulation, wherein, preferably, said detergent, preferably said anionic detergent, is present in said formulation in an amount in the range of from 0.1% (w/v) to 0.3% (w/v) with reference to the formulation, and wherein, more preferably, said detergent, preferably said anionic detergent, is present in said formulation in an amount in the range of from 0.15% (w/v) to 0.25% (w/v) with reference to the formulation.

In one embodiment said alkali hydroxide is selected from the group comprising NaOH or KOH or mixtures thereof.

In one embodiment said alkali hydroxide is present in said formulation in an amount in the range of from 0.1% w/v to 1.0% (w/v) with reference to the formulation, wherein, preferably, said alkali hydroxide is present in said formulation in an amount in the range of from 0.2% (w/v) to 0.4% (w/v) with reference to the formulation., and wherein, more preferably, said alkali hydroxide is present in said formulation in an amount in the range of from 0.25% (w/v) to 0.35% (w/v) with reference to the formulation.

In one embodiment said alcohol, preferably having 1 to 4 C-atoms, is selected from the group comprising ethanol, n-propanol, isopropanol, 1-butanol, 2-butanol, 2-methyl-1-propanol (isobutanol), and 2-methyl-2-propanol (tert-butanol), wherein, preferably said alcohol is n-propanol.

In one embodiment said alcohol, preferably having 1 to 4 C-atoms, preferably said n-propanol, is present in said formulation in an amount in the range of from 5% (v/v) to 50% (v/v) with reference to the formulation., wherein, preferably, said alcohol, preferably having 1 to 4 C-atoms, preferably said n-propanol, is present in said formulation in an amount in the range of from 10% (v/v) to 35% (v/v) with reference to the formulation, and wherein, more preferably, said alcohol, preferably having 1 to 4 C-atoms, preferably said n-propanol, is present in said formulation in an amount in the range of from 10% (v/v) to 30% (v/v), preferably 15% (v/v) to 25% (v/v), more preferably approximately 20% (v/v) with reference to the formulation.

In one embodiment said alcohol, preferably having 1 to 4 C-atoms, preferably said n-propanol, is present in said formulation in an amount in the range of from 20% (v/v) to 40% (v/v), preferably 25% (v/v) to 35% (v/v), more preferably approximately 30% (v/v) with reference to the formulation.

In one embodiment formulation according to the present invention, comprises

    a) sodium dodecyl sulphate (SDS),
    b) sodium hydroxide (NaOH),
    c) n-propanol, and
    d) water, wherein, preferably, the formulation comprises

    a) sodium dodecyl sulphate in an amount in the range of from 0.1% (w/v) to 0.3% (w/v), preferably 0.15% (w/v) to 0.25% (w/v), more preferably approximately 0.2% (w/v),
    b) sodium hydroxide in an amount in the range of from 0.2% (w/v) to 0.4% (w/v), preferably 0.25% (w/v) to 0.35% (w/v), and more preferably approximately 0.3% (w/v) with reference to the formulation,
    c) n-propanol in an amount in the range of from 10% (v/v) to 30% (v/v), preferably 15% (v/v) to 25% (v/v), more preferably approximately 20% (v/v) with reference to the formulation, and
    d) water ad 100% (v/v).

In another embodiment the formulation according to the present invention comprises

    a) sodium dodecyl sulphate in an amount in the range of from 0.1% (w/v) to 0.3% (w/v), preferably 0.15% (w/v) to 0.25% (w/v), more preferably approximately 0.2% (w/v),
    b) sodium hydroxide in an amount in the range of from 0.2% (w/v) to 0.4% (w/v), preferably 0.25% (w/v) to 0.35% (w/v), and more preferably approximately 0.3% (w/v) with reference to the formulation,
    c) n-propanol in an amount in the range of from 20% (v/v) to 40% (v/v), preferably 25% (v/v) to 35% (v/v), more preferably approximately 30% (v/v) with reference to the formulation, and
    d) water ad 100% (v/v).

The objects of the present invention are also solved by a kit comprising

    a) a detergent,
    b) an alkali hydroxide,
    c) an alcohol, preferably having 1 to 4 C-atoms and optionally d) water.

Preferably in said kit, a) - c), and d), if present, are provided in separate containers.

In another embodiment in said kit, a) - c) and d), if present are provided in a ready-to-use-mixture.

Preferably, said detergent is as defined above, said alkali hydroxide is as defined above, and said alcohol, preferably having 1 to 4 C-atoms is as defined above.

The objects of the present invention are also solved by the use of a kit according to the present invention for preparing a formulation according to the present invention.

The objects of the present invention are also solved by a method for prion decontaminating and/or disinfecting an object or a surface thereof comprising:

a) contacting said object or said surface thereof by submerging or rinsing it in or with a formulation according to the present invention,
b) allowing said formulation to remain in contact with said object or said surface thereof by submerging or rinsing for a period and under conditions sufficient to decontaminate said object or said surface thereof of prions and to disinfect said object or said surface thereof of bacteria, viruses or vegetative forms of fungi, and
c) optionally followed by autoclaving or sterilising said object.

Preferably, said period is from 1 min to 60 min and said conditions are a temperature in the range of from 5°C to 80°C, preferably 5°C to 50°C, more preferably 15°C to 30°C.

In one embodiment said decontamination of prions is a reduction of prion infectivity by at least a factor of 4 logs of the original infectivity, and said disinfection of bacteria or viruses is a reduction of bacterial or viral infectivity by at least a factor of 4 logs of the original infectivity.

In one embodiment said object originates from/belongs to the field of medicine, dental medicine, veterinary medicine, food production or -processing, agriculture or laboratory work and is preferably specified as a surgical instrument, diagnostic instrument, dental instrument, catheter, other medical device, operating room, cell culture, laboratory instrument, laboratory surface or a piece of these

The objects of the present invention are also solved by the use of a formulation according to the present invention for prion decontaminating and/or disinfecting an object or a surface thereof.

All other disinfectants in use have a narrower spectrum of activity, a protein fixating effect, or a strongly oxidative/corrosive activity with adverse effects on steel.

The inventors have found that a formulation comprising a detergent and an alkali hydroxide and an alcohol, preferably a C1-C4 alcohol, has a potent disinfecting capability against viruses and bacteria whilst also maintaining a potent prion decontaminating activity. This is all the more surprising given that alcohols are expected to have a stabilizing and fixating effect on prions, such that one would have expected the presence of an alcohol e. g. a C1-C4-alcohol to cause an effect that would compromise the prion decontaminating activity. Yet, despite such an expected adverse effect of the tested alcohols, the prion decontaminating activity of the formulation is not compromised, and an efficient prion decontamination is achieved.

As used herein, the term "alcohol having 1 to 4 C-atoms" is meant to refer to any of the following: methanol, ethanol, n-propanol, isopropanol, 1-butanol, 2-butanol, 2-methyl-1-propanol (isobutanol), 2-methyl-2-propanol (tert-butanol), and mixtures thereof.

A "kit", as used herein, is meant to refer to an assembly of agents, wherein each of the agents is provided in a separate container, such as a vial, and wherein the formulation in accordance with the present invention may be provided by appropriate mixing of the various agents, such that the formulation is made up freshly before use. In a preferred embodiment, the formulation in accordance with the present invention is made fresh, prior to its use. However, it has to be mentioned that a ready-to-use mixture can also be prepared which does not need to be made-up freshly before use.

Preferably, the kit in accordance with the present invention also includes instructions on how and in what quantities to mix the various components in order to make up the formulation according to the present invention.

The term "prion decontaminating", as used herein, is meant to refer to a process whereby a major proportion of prion acitivity, i. e. at least 4 logarithmic units (logs) of prion infectivity (which is quantified in $LD_{50}$ [50% lethal doses]), and preferably $\geq$ 5 logs (i.e. $\geq$ 99,999% of the original activity) is removed.

The term "log", as used herein, when referring to an activity, usually means a factor of 10, e.g. by which such activity is reduced with respect to the original activity value.

The term "disinfecting" as used herein, is meant to refer to a process whereby infectious agents, such as bacteria, viruses or vegetative forms of fungi are killed or inhibited in their growth. Specifically, such term refers to a process whereby a reduction of at least 4 logs (i.e. $\geq$ 99,99% of the original activity) is achieved.

Furthermore, in the following, reference is made to the figures, wherein

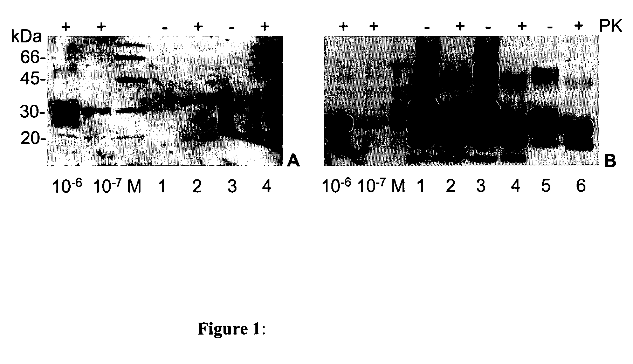

Figure 1 shows Western Blot results on the efficacy of (A) a mixture of 0.2% SDS and 0.3% NaOH and (B) 70% ethanol used for decontamination of steel surfaces from PrP$^{Sc}$. More specifically Figure 1 shows detection of full-length PrP and PrP27-30 in eluates from contaminated steel wires after incubation with the reagents without (- PK) and after proteinase K (+ PK) digestion. Samples not subjected to PK digestion correspond to 46.2 mm$^2$, PK treated samples to 23.1 mm$^2$ of wire surface. A-B lanes 10$^{-6}$ or 10$^{-7}$ internal standards: PK digested brain homogenate from scrapie hamsters corresponding to 1x10$^{-6}$ g or 1x10$^{-7}$ g brain tissue. Lane M, molecular mass marker. Numbered lanes represent protein eluates from 30 contaminated wires incubated for 5 min (lanes 1 and 2) or 20 min (lanes 3 and 4) at 23°C in SDS/NaOH (A) or 70 % ethanol (B). B, lanes 5 and 6: water controls; the contaminated wires have been incubated in distilled water for 5 min at 23°C. The samples incubated in 70 % ethanol (B, lanes 1-4) or in distilled water (B, lanes 5 and 6) were diluted 1:10 in LPP/Urea before electrophoresis. These samples correspond to 4.62 mm$^2$ (lanes 1, 3 and 5) or 2.31 mm$^2$ (lanes 2, 4 and 6) of wire surface.

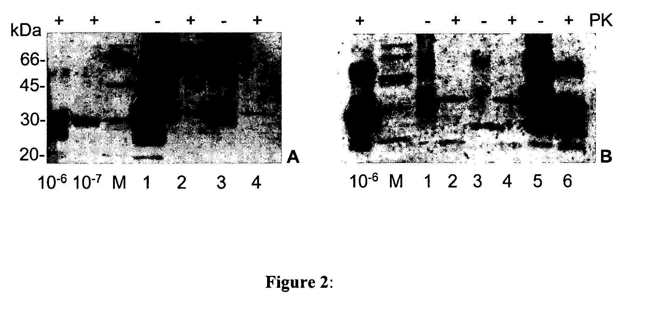

Figure 2 shows the Western Blot results on the efficacy of a mixture of 0.2% SDS and 0.3% NaOH in 50% ethanol (A) and in 50% n-propanol (B) used for decontamination of steel surfaces from Prp$^{Sc}$.

More specifically Figure 2 shows detection of full-length PrP and PrP27-30 in eluates from contaminated steel wires after incubation with the reagents without (- PK) and after proteinase K (+ PK) digestion. Samples not subjected to PK digestion correspond to 46.2 mm$^2$, PK treated samples to 23.1 mm$^2$ of wire surface. A-B lanes 10$^{-6}$ or 10$^{-7}$ internal standards: PK digested brain homogenate from scrapie hamsters corresponding to 1x10$^{-6}$ g or 1x10$^{-7}$ g brain tissue. Lane M, molecular mass marker. Numbered lanes represent protein eluates from 30 contaminated wires incubated for 5 min (lanes 1 and 2) or 20 min (lanes 3 and 4) at 23°C in a mixture of 0.2% SDS and 0.3% NaOH in 50% ethanol (A) and in 50% n-propanol (B). B, lanes 5 and 6: water controls; the contaminated wires incubated in distilled water for 20 min at 23°C. Both samples were diluted 1:10 in LPP/Urea before electrophoresis. These samples correspond to 4.62 mm2 (lanes 5) and 2.31 mm$^2$ (lanes 6) of wire surface.

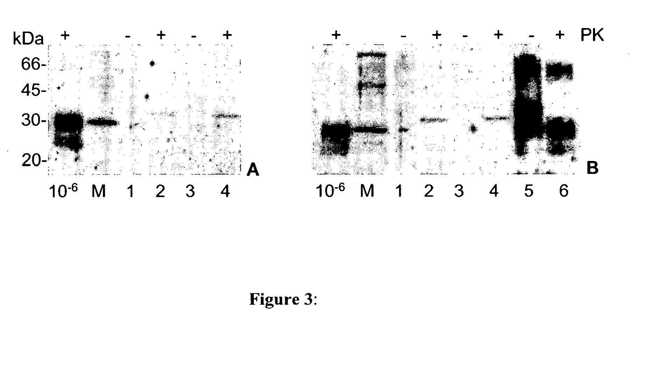

Figure 3 shows Western Blot results on the efficacy of a mixture of 0.2% SDS and 0.3% NaOH in 30% (A) and 20% (B) n-propanol used for decontamination of steel surfaces from PrP$^{Sc}$.

More specifically figure 3 shows Western blot results showing the efficacy of a mixture of 0.2 % SDS and 0.3 % NaOH in 30 % (A) and in 20 % n-propanol (B) used for decontamination of steel surfaces from PrP$^{Sc}$. Detection of full-length PrP and PrP27-30 in eluates from contaminated steel wires after incubation with the reagents without (- PK) and after proteinase K (+ PK) digestion. Samples not subjected to PK digestion correspond to 46.2 mm$^2$, PK treated samples to 23.1 mm$^2$ of wire surface. A-B lane 10$^{-6}$, internal standard: PK digested brain homogenate from scrapie hamsters corresponding to 1x10$^{-6}$ g brain tissue. Lane M, molecular mass marker. Numbered lanes represent protein eluates from 30 contaminated wires incubated for 5 min (lanes 1 and 2) or 10 min (lanes 3 and 4) at 23°C in the solutions. B, lanes 5 and 6: water controls; the contaminated wires incubated in distilled water for 20 min at 23°C. Both samples were diluted 1:10 in LPP/Urea before electrophoresis. These samples correspond to 4.62 mm$^2$ (lanes 5) and 2.31 mm$^2$ (lanes 6) of wire surface.

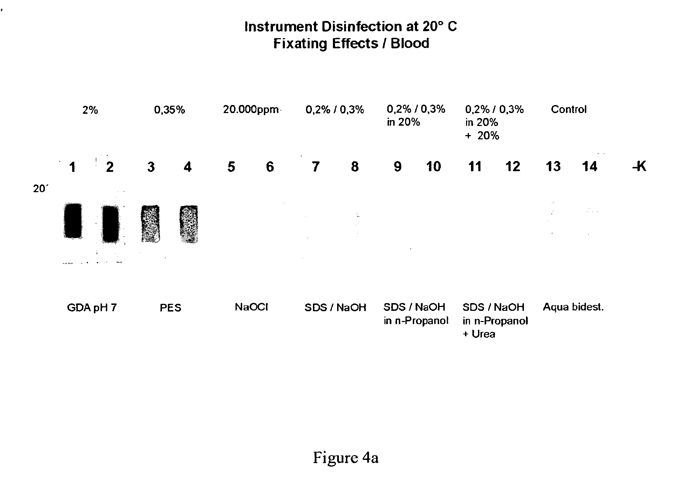

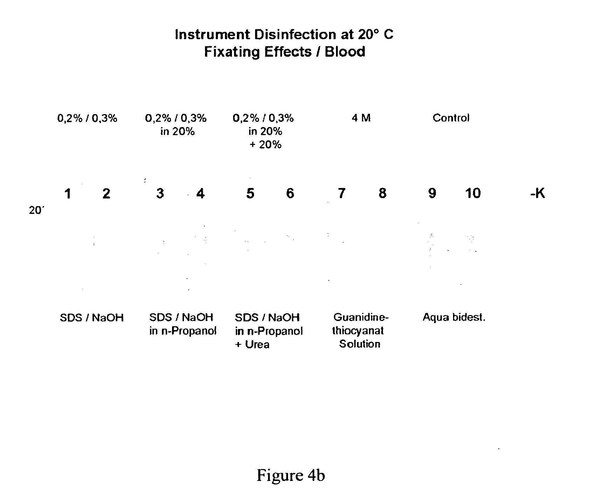

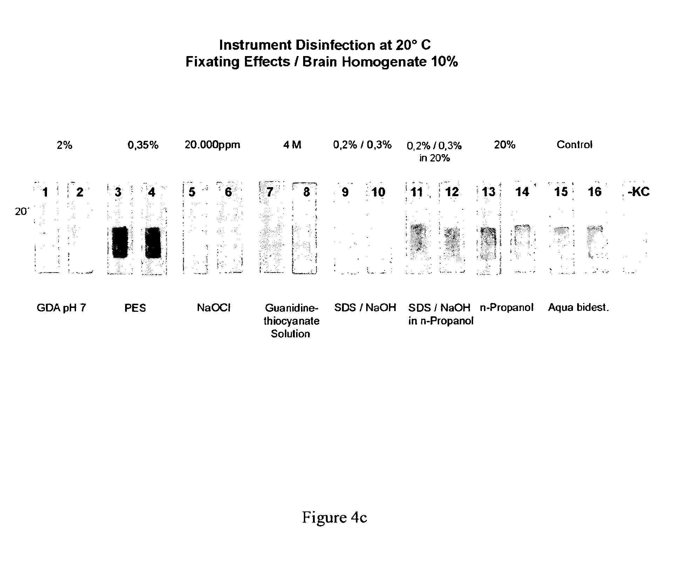

Figure 4 shows the results of the examination of protein fixating effects by different treatments for disinfection applied on blood or 10% (w/v) hamster brain homogenate (GDA: glutardialdehyde; PES: peracetic acid; -K or -KC: negative control).

Moreover reference is made to the following examples, which are given to illustrate, not to limit the present invention.

## Examples

### Example 1 Preparation of stock solution of SDS/NaOH and the various formulations

NaOH was used as a finely grained crystalline substance; SDS was provided in form of a 5% w/v stock solution.
Among others, the following aqueous formulations are tested as decontaminating mixtures/disinfectants:

    a) 0.2% (w/v) SDS/0.3% (w/v) NaOH in aqua bidest.
    b) 0.2% (w/v) SDS/0.3% (w/v) NaOH in 50% (v/v) ethanol.
    c) 0.2% (w/v) SDS/0.3% (w/v) NaOH in 30% (v/v) n-propanol, and
    d) 0.2% (w/v) SDS/0.3% (w/v) NaOH in 20% (v/v) n-propanol.

Additionally, the efficacy of 50% (v/v) ethanol and 30% (v/v) and 20% (v/v) n-propanol alone is tested.
The solutions are prepared prior to use. It has to be noted that a 10-fold concentrated SDS/NaOH-stock solution may show precipitation after a few hours. The final mixture of 0.2% SDS / 0.3% NaOH does not show a precipitation effect.
First a ten-fold concentrated SDS-NaOH-solution (stock solution) is prepared and is hereafter referred to as solution 1:

    To this end, 0,3 g NaOH is dissolved in 6 ml aqua bidest, and thereafter 4 ml of a 5% SDS-solution is added and mixed. For the experiments the solution is sterile filtered when necessary and represents the aforementioned SDS/NaOH-stock solution or solution 1.

    To produce the above formulations a) - d) including a microbial test sample (hereafter referred to as "microbial test suspension"), the following mixtures are prepared:

a) 0.2% SDS/0.3% NaOH in aqua bidest (final concentrations):

8 ml aqua bidest
+ 1 ml solution 1
+ 1 ml of microbial test suspension

b) 0.2% SDS/0.3% NaOH in 50% ethanol (see above):

3 ml aqua bidest
+ 5 ml ethanol abs.
+ 1 ml solution 1
+ 1 ml of microbial test suspension

c) 0.2% SDS/0.3% NaOH in 30% n-propanol (see above):

5 ml aqua bidest
+ 3 ml n-propanol
+ 1 ml solution 1
+ 1 ml of microbial test suspension

d) 0.2% SDS/0.3% NaOH in 20% n-propanol (see above):

6 ml aqua bidest
+ 2 ml n-propanol
+ 1 ml solution 1
+ 1 ml of microbial test suspension.

**Example 2 Analysis of protein fixating effects of disinfectants**

Test objects

Frosted glass strips served as test objects (16 mm wide, 60 mm long), which, prior to use, are cleaned in soap solution, rinsed with aqua dest. and sterilized with hot air after drying.

Disinfectant (see example 1)

SDS/NaOH, SDS/NaOH in ethanol, SDS/NaOH in n-propanol. Aqua bidest was used as control.

Contamination

For contamination of the test objects sheep blood that is capable of coagulation is used, to which during blood withdrawal a heparin preparation has been added (0.1 ml Liquemin 5000 per 100 ml blood). The blood can be stored at 4°C for approximately 14 days.
Prior to using this blood as contaminating agent, Protamin 1000 is added to the blood to start coagulation (0.15 ml per 10 ml blood). Immediately thereafter, 50 $\mu$l of the coagulating blood are applied to each test object and homogeneously distributed in the test field which is 1 x 2cm$^2$, using a pipette. Because the blood is cooled in ice water, the coagulation only starts slowly, and there is sufficient time to contaminate a sufficient number of test objects. In order to avoid drying of the blood, the test objects are kept in a humid chamber until full coagulation is achieved (ca. 15 - 20 minutes).

Analysis of protein fixating effects

The contaminated test objects are separately placed into screw cap vials, using pincers, together with 10 ml of the solution to be tested for 10 and 30 minutes respectively at 20°C. The solutions are incubated for approximately 30 minutes in a water bath at 20°C. After the incubation period, the screw cap vials are swirled 20 x. The test objects are separately taken out using pincers, any remaining liquid is allowed to drip off onto pulp or filter paper, the test objects are rinsed once in aqua dest. and any remaining liquid is once more allowed to drip off.
For staining, the test objects are placed separately into tubes containing 15 ml Coomassie-blue of Bio-Rad 161-0400, after 45 minutes, the adhering colour solution is allowed to drip off, and the test objects are subsequently rinsed 4 -5 times in destaining solution (50% methanol, 10% glacial acetic acid in aqua dest.). In each series of stainings, a non-contaminated object was taken as a negative control.

The results of the examination of protein fixating effects by different treatments for disinfection are shown in figures 4A-C.

## Example 3 a) Efficacy against mycobacteria - quantitative suspension tests

**1. Material**

Test bacteria

M. avium DSM 44156 (type strain, i. e. the species-defining strain in the strain repository) and M. avium DSM 44157 (as mentioned in European Norm EN 14348 / Quantitative suspension test for chemical disinfectants and antiseptics used in human medicine)

Nutrient medium

Middlebrook 7H10 Agar with OADC (OADC [Oleic acid, Albumin fraction V, bovine, Dextrose, Catalase (beef)] is an additive to the medium necessary for the growth of mycobacteria; Becton Dickenson Art. Nr.: 254521)

Inactivating agents

0.2% SDS/0.3 NaOH in aqua bidest., ethanol or n-propanol (see example 1) for preparation of the solutions, see example 1

Growth

From a cryo tube of a stock culture stored at -80°C 0.2 ml suspension are plated out on Middlebrook 7H10 agar plates with OADC enrichment (BD). The inoculated plates are protected from drying by sealing them with insulating tape and are incubated for 21 days at 36°C.

Preparation of Bacterial Suspension

The bacterial lawn of 5 Middlebrook plates is washed off using 2 x 5ml 0.1% Tween 80 in aqua bidest ("Tween-bidest-solution") per Petri dish, centrifuged (10 minutes at 0°C using 3000 rpm; ca. 2000 x g) and is washed three times using Tween-bidest-solution (see above). Each time, the sediment is replenished up to the starting volume. After the last round of centrifugation, the sediment is taken up in 5ml Tween-bidest-solution and is homogenized in a 15ml glass/ Teflon homogenizer using ice cooling for 10 minutes. The homogenate is diluted 1 : 10 using Tween-bidest-solution and is hereafter referred to as bacterial suspension. The bacterial suspension is stored in a screw cap vial together with glass beads in the fridge up until use. The bacterial suspension can be used for a period of up to 5 days. Prior to use, the suspension should be shaken on a Vortex in order to bring the mycobacteria into a homogenous solution again. The homogenisate should have a bacterial content of at least $10^9$ colony forming units (CFU) /ml.

2. Experiment

Inactivation

The examination of efficacy is performed at 20°C in an Eppendorf Thermomixer comfort on the lab bench. The disinfectant solutions are incubated in the Thermomixer at least 20 minutes before the experiment. 0.1 ml bacterial solution is mixed with 0.9 ml disinfectant (see above), and is vortexed for 20 seconds. The experiments are performed in 2 ml Safe-Lock-tubes of Eppendorf.

The exposure time is 5 and 20 minutes, respectively, at a mixing frequency of 300 rpm. A constant exposure time during inactivation experiments is to be safeguarded.

Determination of colony forming units (CFU)

After the inactivation period, the samples are immediately centrifuged in a cooled Eppendorf Centrifuge at 12000 rpm for 1 minutes. After careful pipetting off the supernatant, the sediment is resuspended in 1 ml M/15 (i.e. 0,067 M) phosphate buffer pH 7 (M/15 is a medium for neutralisation) + 3% Tween 80, and vortexed for 20 seconds. Subsequently, dilutions at a ratio of 1 : 10 in M/15 phosphate buffer pH 7 + 3% Tween 80 are prepared. The experiment is performed in Deepwell-plates (Linbro liquisystem) using a multi-channel pipette. The mixing is to be done carefully, and the pipette tips are to be exchanged between the separate dilution steps.

From the original experiment tube (= value 0) and from the various dilution steps, 0.1 ml each are plated out on Middlebrook 7H10 agar plates with OADC-enrichment. The agar plates are kept in polyethylene (PE) bags against drying out and are incubated for four weeks at 36°C. The CFU grown on the nutrient are counted using a counting device and recorded.

### Determination of reference value

For the reference value (control) 0.1 ml bacterial suspension is mixed with 0.9 ml aqua bidest and is processed under the same conditions as described above.

### 3. Analysis

The efficacy of the inactivation agent (disinfectant) is indicated by the reduction factor (RF). From the average values of the numbers of CFU after exposure to the inactivation solution (log N) and the numbers of CFU of the control (log $N_0$), the reduction factor (RF) is calculated:

$$RF = \log N_0 - \log N.$$

### b) Efficacy against Enterococci - quantitative suspension tests

### 1. Material

### Test bacteria

Enterococcus faecium DSM 2146 (DSM: German type culture collection)

### Nutrient medium

Brain Heart Infusion-Agar (BHI Agar) Difco Nr.: 0418-17

### Inactivation agent (disinfectant)

SDS/NaOH in aqua bidest., SDS/NaOH in Ethanol, SDS/NaOH in n-propanol (see

example 1)

The solutions need to be prepared 10-fold more concentrated, since they become 1 : 10 diluted by the bacterial suspension in the sample.

### Growth of test culture

A subculture taken from a previously grown culture is plated out onto BHI agar in 2 Kolleflasks and is incubated for 24 h at 36°C. For each test, a new test culture is to be established.

### 2. Experiment

### Preparation of bacterial suspension

The bacterial lawn of the test culture is washed with 10 ml aqua bidest, filtered through glass wool, centrifuged for 10 minutes at 0°C at 3000 rpm (ca. 2000 x g) in the Cryofuge 5000, and is washed 3 times with aqua bidest. After the last centrifugation, the pellet is resuspended in 5 ml aqua bidest, transferred in a gradated centrifuge tube and is centrifuged for ten minutes as indicated above. The pellet is diluted I : 100 using aqua bidest, and the bacterial suspension is vortexed together with glass beads for 30 seconds in a screw cap vial.

Inactivation

The test of efficacy is performed in an Eppendorf Thermomixer comfort at 20°C on the lab bench.
The disinfectant solutions are incubated at least 20 minutes prior to the experiment in the Thermomixer.
The experiments are performed in 2 ml safe-lock-tubes of Eppendorf. 150 $\mu$l bacterial suspension is mixed with 1350 $\mu$l of disinfectant and is vortexed for 20 seconds. The exposure time is 5 and 20 minutes, respectively, at a mixing frequency of 300 rpm. A constant exposure time during the inactivation experiments is to be safeguarded.

Determination of number of colony forming units (CFU)

After the exposure time, the sample is immediately centrifuged in a cooled MiniSpin Plus Centrifuge for 1 minute at 12000 rpm. The supernatant is carefully pipetted off, the pellet is resuspended in 1.5 ml M/15 phosphate buffer pH 7 and the sample is vortexed for 20 seconds.
Further processing of the sample is performed by preparing serial dilutions (1 :10) using M/15 5 phosphate buffer pH 7 in 2.2 ml Deepwell-plates using a multi-channel pipette. 150 $\mu$l sample is added to 1350 $\mu$l M/15 phosphate buffer pH 7 and mixed. 1 ml each of the sample (= value 0) and from the respective dilution steps is transferred into Petri dishes and is poured together with 20 ml liquefied BHI Agar to form plates. The plates are prevented from drying out by sealing foil and are incubated 14 days at 36°C. The CFUs grown in and on the nutrient are counted using a counting apparatus and are recorded.

Determination of reference value

For the reference value (control) 150 $\mu$l bacterial suspension is mixed with 1350 $\mu$l aqua bidest and is treated under the same conditions as described above.

**3. Analysis**

The efficacy of the inactivating agent is indicated by the reduction factor (RF). From the average values of the number of CFUs after exposure to the disinfectant solution (log N) and of the number of CFUs of the control (log $N_0$), the reduction factor (RF) is calculated:

$$RF = \log N_0 - \log N$$

**c) Efficacy against mycobacteria - quantitative carrier tests with blood as test soil**

**1. Material**

Test bacterium

M. avium DSM 44156

Nutrient medium

Middlebrook 7H10 Agar with OADC [(oleic acid, albumin fraction V, Bovine, dextrose, catalase (beef)] BD Art. No.: 254521

Carrier for bacteria

Frosted glass is used as carrier for bacteria. Strips of frosted glass of 16 mm width and 60 mm length are placed into soap solution (e.g. RBS 50) prior to their first use, washed in a dish washer and thereafter boiled three times in Aqua bidest. After drying, the strips are sterilized for two hours at 180°C using hot air.

Contamination

Heparinized sheep blood (0.1 ml Liquemin 5000 per 100 ml blood)

Disinfectant

0.2 % SDS / 0.3 % NaOH in Aqua bidest, SDS / NaOH in ethanol, SDS / NaOH in n-propanol (see also example 1)

Growth

From a cryo-tube of a stock culture stored at -80°C, 0.2 ml are plated onto Middlebrook 7H10 Agar plates with OADC enrichment (BD). The inoculated plates are protected from drying by sealing them with insulating tape and are incubated for 21 days at 36°C.

Preparation of bacterial suspension

The bacterial lawn of 10 Middlebrook-plates (see growth) is washed off using 2 x 5 ml 0.1 % Tween 80 in Aqua bidest ("Tween-bidest-solution") per Petri dish, centrifuged (10 minutes at 4°C using 3000 rpm; ca. 2000 x g) and is washed three times using Tween-bidest-solution (see above). Each time, the sediment is replenished up to the starting volume. After the last round of centrifugation, the sediment is stirred up using a glass rod and taken up in 2 ml Tween-bidest-solution and is homogenized in a 5 ml glass/Teflon homogenizer using icecooling for 10 minutes at 1500 rpm. The homogenate = bacterial suspension is stored in the fridge until use in a culture vial containing glass beads. The bacterial suspension can be used for a period of up to 5 days. Prior to use, the suspension should be shaken on a vortex in order to bring the mycobacteria into a homogenous solution again. The bacterial suspension should have a bacterial content of at least $10^9$ colony forming units (CFU/ml).

**2. Experiments**

Preparation of disinfectant-solutions

For the preparation of the disinfectants, see example 1. The solutions are incubated in screw-cap vials in a water bath at 20°C (for at least 30 minutes).

Preparation of bacterial suspension

On the day of the experiment, 0.5 ml bacterial suspension (see above) is mixed with 4.5 ml sheep blood in a small Erlenmeyer flask and is kept on ice.

Contamination of test objects

Immediately prior to application onto the test objects (= frosted glass strips, see above), the bacterial suspension is mixed with 75 µl Protamin 1000 for coagulation and carefully mixed. Cooling of the suspension is continued to slow down the onset of coagulation. 50 µl bacterial suspension each are pipetted homogenously onto the test field (10 mm wide, 20 mm long - template, see above) on the test object. In order to avoid drying of the blood, all contaminated test objects are stored in a humid chamber immediately up until disinfection. At room temperature, the blood is coagulated after 15-20 minutes.

Disinfection

Using pincers, each of the contaminated test objects is placed into 10 ml disinfectant dilution to be tested for the intended exposure period. The solutions are in 15 ml screw-cap vials and should be kept in a water bath at 20°C without any vibrations. Each experiment is to be performed in at least duplicate. A strict adherence to the intended exposure period is to be observed. Hence, it is prudent to introduce the samples in a temporarily staggered manner.

**Examination for surviving bacteria**

After completion of the exposure period, each test object is taken out using sterile pincers and placed into a screw-cap vial with 5 ml 3 % Tween 80 in M/15 phosphate buffer pH 7. The vial is shaken several times carefully such that the test object is rinsed by the neutralization solution (i.e. M/15 phosphate buffer + 3 % Tween 80).

Subsequently, the test object is taken out using sterile pincers, placed in a mortar, and the adhering contaminants are taken off using a scalpel and rinsed off with 0.5 ml neutralization solution from the screw-cap vial. The mortar is subsequently covered again using aluminum foil and frozen for 20 minutes at -20°C. The test object is placed back into the vial, sterile glass beads are added, and the vial is vortexed for 20 seconds and subsequently placed on ice. The frozen contaminants in the mortar are carefully ground using a pestle, are mixed after the remaining amount of neutralization solution in the respective vial has been added, and are returned into the screw-cap vial. After processing of all samples, the vials are shaken in a basket for 5 minutes on a universal shaker, whilst being in a horizontal position (frequency 400/min).

Further processing is done by preparing serial dilutions (1:10) using 3 % Tween 80 in M/15 phosphate buffer pH 7 in 1.1 ml DeepWell-plates using a multi-channel pipette. From the screw-cap vial (= 0 value) and from the dilution steps, 0.1 ml each is plated out on Middlebrook 7H10-plates. The Agar plates are incubated for 4 weeks at 36°C (in bags of PE (polyethylene) to prevent drying out). The grown colony forming units (CFU) on the nutrient medium are counted using a counting device and are recorded.

Determination of reference value

Contaminated test objects which had been placed in Aqua bidest and processed under the same conditions as described above, served as a reference value (control).

## 3. Analysis

The efficacy of the disinfectant is given by the reduction factor (RF). From the average number of CFUs after exposure to the disinfectant dilution (log N) and the number of CFUs of the control (log $N_0$), the reduction factor (RF) is calculated:

$$RF = \log N_0 - \log N.$$

**d) Efficacy against Enterococci - quantitative carrier tests with blood as test soil**

**1. Material**

Test bacterium

Enterococcus faecium DSM 2146

Nutrient medium

Brain Heart-Infusion-Agar (BHI Agar) Difco Nr.: 0418-17

Carrier for bacteria in test soil

Frosted glass is used as carrier for bacteria in test soil (blood). Strips of frosted glass of 16 mm width and 60 mm length are placed into soap solution (e.g. RBS 50) prior to their first use, washed in a dishwasher and thereafter boiled three times in aqua bidest. After drying, the strips are sterilized for two hours at 180°C using hot air.

Contamination

Heparinized sheep blood (0,1 ml Liquemin 5000 per 100 ml blood; see also "Carrier for bacteria in test soil")

Disinfectant

SDS/NaOH in Aqua bidest., SDS/NaOH in ethanol, SDS/NaOH in n-Propanol (see also example 1)

Growth

An inoculum is taken from a previously grown culture and is plated out on BHI agar in two Kolle-plates and is incubated for 24 h at 36°C.

**2. Examination**

Preparation of disinfectant

For the preparation of the disinfectants see example 1. The disinfectant-dilutions are incubated in screw cap vials in a water bath at 20°C (for at least 30 minutes).

Preparation of bacterial suspension

The bacterial lawn is washed using 10 ml aqua bidest, filtered through glass wool, centrifuged for 10 minutes at 0°C (3000 rpm, ca. 2000 x g) and washed once with aqua bidest. The sediment is resuspended in 5 ml aqua bidest and centrifuged in a gradated centrifuge tube for 10 minutes. The sediment (the amount of which is to be recorded) is taken up in 10 ml sheep blood and carefully mixed. This suspension is placed on ice.

Contamination of test objects

Immediately prior to application onto the test objects (=frosted glass strips, see above), the bacterial suspension is mixed with 150 μl protamin 1000-treated heparinized sheep blood and carefully mixed. 50 μl bacterial suspension each are pipetted homogeneously onto the test field (10 mm wide, 20 mm long) on the test objects. A template for such test field is used. In order to avoid drying of the bacterial suspension, the contaminated test objects are stored in Petri dishes in humid chambers until disinfection. At room temperature, the bacterial suspension is coagulated after 15 to 20 minutes.

Disinfection

Using pincers, each of the contaminated test objects is placed into 10 ml disinfectant dilution for the intended exposure period. The solutions are in 15 ml screw cap vials and should be kept in a water bath at 20°C without any vibrations. Each experiment is to be performed in duplicate. A strict adherence to the intended exposure period is to be observed.

Examination for surviving bacteria

After completion of the exposure period each test object is taken out using sterile pincers and placed into a screw cap vial with 5 ml M/15 phosphate buffer pH 7. The vial is shaken several times carefully such that the test object is rinsed by the neutralization solution (i. e. M/15 phosphate buffer + 3% Tween 80).
Subsequently, the test object is taken out using sterile pincers, placed in a mortar, and the adhering contaminants are taken off using a scalpel, and rinsed off with 0.5 ml neutralization solution from the screw cap vial. The mortar is subsequently covered again using aluminium foil and frozen for 20 minutes at -18°C.
The test object is placed back into the vial, sterile glass beads are added, and the vial is vortexed for 20 seconds and subsequently placed on ice. The frozen contaminants in the mortar are carefully ground using a pestle, are mixed after the remaining amount of neutralization solution in the respective vial, has been added, and are returned into the screw cap vial. After processing of all samples, the vials are shaken in a basket for 5 minutes on a universal shaker, whilst being in a horizontal position (frequency 400/min).
The further processing is done by preparing serial dilutions (1:10) using M/15 phosphate puffer pH 7 in 2.2 ml Deepwell-plates using a multichannel pipette. 1 ml each from the shaking vials and from the dilution steps are poured together with 20 ml liquefied BHI agar, to form plates. The plates are wrapped in foil to avoid drying and are incubated for 2 weeks at 36°C. The CFUs grown in and on the nutrient are counted using a counting apparatus and are recorded.

Determination of reference value

Contaminated test objects which had been placed in aqua bidest only but are otherwise processed under the same conditions as described above, served as reference value (control).

**3. Analysis**

The efficacy of the disinfectant is given by the reduction factor (RF). From the average number of CFUs after exposure to the disinfectant-dilution (log N) and the number of CFUs of the control (log No) the reduction factor (RF) is calculated:

$$RF = \log N_0 - \log N.$$

**e) Efficacy against poliovirus-1-LSc-2ab - quantitative carrier tests with blood as test soil**

**1. Material**

Test virus

Polio-1-Lsc-2ab ($10^9$ infectious viruses/ml)

Cells

L20B

Media

| | |
|---|---|
| First growth medium: | MEM Hank Salt Solution with Hepes buffer 10% foetal calf serum, from company PAA 1% L-glutamin, from company ICN 1% antibiotics (AB), consisting of penicillin + streptomycin, from company PAA 1% non-essential amino acids: from company Biocrom AG 0.8 % $Na_2HCO_3$ |
| 1.2 Maintenance medium: | MEM Hanks Salt Solution with Hepes buffer 2% foetal calf serum, from company PAA 1% L-glutamin, from company ICN |
| | 1% antibiotics (AB), consisting of penicillin + streptomycin, from company PAA 1% non-essential amino acids: from company Biocrom AG 0.8 % $Na_2HCO_3$ |
| 1.3 Test medium (Titration of virus): | MEM Hanks Salt Solution with Hepes buffer 5% foetal calf serum, from company PAA 1% L-glutamin, from company ICN 1% antibiotic (AB), consisting of penicillin + streptomycin, from company PAA 1% non-essential amino acids: from company Biocrom AG 0.8 % $Na_2HCO_3$ |
| 1.4 Water | 3x distilled water (low pyrogen content) |

Virus inoculation (stock virus suspension)

Desired starting titre: $10^9$/ml (start of a new batch using the virus of an earlier batch; IMPORTANT: never passage a polio batch more than ten times because of the risk of a (back)mutation of the strain; hence keeping record and track of the passaging number of the virus is very important)
Ratio of cell number to virus: 1:1 to 1:10
Incubation at 37°C and 5% $CO_2$ in 25 cm$^2$-bottles
Amount of virus required for obtaining a new batch: Four bottles (and one cell control bottle without virus) are inoculated using 0.1 ml, 0.2 ml, 0.5 ml and 1.0 ml virus suspension and incubated. It is recorded on a daily basis how the cytopathogenic effect (CPE) is formed and whether or not at the end of the incubation the entire cell lawn has a CPE (once a complete CPE has been reached after 4-5 days, this dosage will be used for the subsequent virus production).
Course of infection and virus passaging is recorded.

Production of polio virus- concentrate

Cell detritus is removed by centrifugation at 5000 rpm, 30 minutes. Thereafter a virus concentrate is obtained by concentrating the supernatants of infected L20B-cell cultures via ultra centrifugation (19000 rpm (53900 x g), 4 hours).

For the production of 10 ml virus concentrate, approximately 3 batches are required (depending on the titre of the virus supernatant and the titre necessary for the corresponding experiments).

Cultivation of L20B-cells for virus titration in 96 well plates

The cell suspension (about $1\text{-}2 \times 10^5$ cells/ml) is diluted using growth medium, and 100 $\mu$l per well are subsequently placed onto the 96 well plate. The plate is thereafter sealed in cling film and incubated at 37°C and 5% $CO_2$. On the day of use, a microscopy examination is performed to test whether or not the cells have really grown well and uniformly (cell lawn must not be showing gaps nor must it be overgrown).

Germ (virus) carrier-test

Frosted glass is used as carrier for virus suspensions. Strips of frosted glass (16 mm width and 60 mm length) are placed into soap solution (e.g. RBS 50) prior to their first use, washed in a dish washer and thereafter boiled three times in aqua bidest. After drying, this strips are sterilized for two hours at 180°C using hot air.

Contamination (test soil)

Heparinized sheep blood (0.1 ml liquemin 5000 per 100 ml blood)

Disinfectant

0.2% SDS / 0.3% NaOH in aqua bidest, SDS/NaOH in ethanol, SDS / NaOH in n-propanol, see also example 1

**2. Examination**

Preparation of disinfectant-solutions

For the preparation of the disinfectants see example 1. The disinfectant-solutions are incubated in screw cap vials in a water bath at 20°C (for at least 30 minutes).

Preparation of suspension to be tested

On the day of the experiment, 200 $\mu$l virus concentrate is mixed thoroughly with 1750 $\mu$l sheep blood in a little vial and placed on ice. For the examination of toxicity, in the negative-control, 200 $\mu$l PBS are used instead of the virus concentrate.

Contamination of virus carriers

Immediately prior to application onto the carriers, the suspension (200 ul of virus concentrate in 1750 ul sheep blood) to be tested is mixed with 50 $\mu$l protamin 1000 and carefully mixed. Cooling of the suspension is maintained such that coagulation only starts slowly. 50 $\mu$l test suspension each are pipetted homogeneously onto the test field (10 mm wide, 20 mm long, using a template) on the virus carrier. A template for such test field is used. In order to avoid drying of the blood, all the virus carriers are stored in a humid chamber immediately after contamination until disinfection. At room temperature, the blood is coagulated after 15-20 minutes.

Disinfection

Using pincers, each of the contaminated virus carriers is placed into 10 ml disinfectant dilution to be tested for the intended exposure period. The solutions are in 15 ml screw cap vials and should be kept in a water bath at 20°C without any vibrations. A strict adherence to the extended exposure period is to be observed. Therefore it is useful to place the sample into the water bath in a temporally staggered manner.

Examination for surviving viruses

After completion of the exposure period, each virus carrier is taken out using sterile pincers and placed into a screw cap vial with 2.5 ml neutralization solution (maintenance medium plus 2% sodium sulfite, sterile filtered). The vial is shaken several times carefully such that the carrier is rinsed by the neutralization solution. Subsequently, the virus carrier is taken out using sterile pincers, placed in a mortar, and the adhering contaminants are taken off using a scalpel, and rinsed off with 0.5 ml neutralization solution from the screw cap vial. The mortar is subsequently covered again using aluminium foil and frozen for 20 minutes at -20°C. The virus carrier is returned into the vial, sterile glass beads are added, and the vial is vortexed for 20 seconds and subsequently placed on ice. The frozen contaminants in the mortar are carefully ground using a pestle, are mixed after the remaining amount of neutralization solution in the respective vial has been added, and are returned into the screw cap vial. After processing of all samples, the vials are shaken in a basket for 5 minutes on a universal shaker, the vials being in a horizontal position (frequency 400/min). For the positive control, a contaminated carrier is placed in phosphate buffer and aqua bidest, respectively. The negative control serves to test for toxicity of the disinfectant. For a suspension control, 50 $\mu$l virus suspension is directly transferred into 2.5 ml phosphate buffer prior to coagulation.

Determination of reference value

Contaminated virus carriers which had been placed in phosphate buffer and aqua bidest, respectively, and processed under the same conditions as described above, served as reference value (control).

**3. Determination of virus titer**

Dilution series

Dilutions are prepared using maintenance medium as dilution medium in 1:10-steps. The total amount in each dilution step was 2.0 ml:
1.8 ml medium + 0.2 ml of experiment or 0.2 ml of prior dilution step.
After each dilution, vortexing is performed for 20 seconds (dilution tube) or the multi channel pipette is operated at least 20 to 30 times (deep well plate), and only thereafter pipetting is continued.

Virus titration

0.1 ml of each dilution per well is placed into the prepared 96 well plate, i.e. the final volume is 0.2 ml. The cell lawn must be thin but close (monolayer). Each dilution step is placed onto the plate eight times.

Cell control:

On each plate, there must be at least eight adjacent (i.e. one row of) wells as cell control, onto which only maintenance medium (without virus) is placed.

Incubation

Subsequently, the 96 well plates are wrapped in cling film and incubated for 5 days at 37°C and 5% $CO_2$. Thereafter, the experiment is analyzed.

**4. Analysis**

The protocol contains the following data:
experiment number, experiment date, recoding date, virus used (date of pooling, dilutions), cell type, exposure time, used disinfectant and concentration, exposure temperature.
The analysis of the cell control is also recorded. If the cell control is not regular on a plate, this plate must not be analyzed. The samples are applied again onto a new 96 well plate, and this must be recorded in the protocol. If necessary, the whole experiment needs to be repeated. The protocols also indicate for all wells of all samples and controls whether or not a beginning, a complete or no cytopathic effect (CPE) is observed: + (complete CPE), (+) (beginning CPE), - (no CPE). All wells must be analyzed for all samples. The examination of efficacy of a disinfectant must be performed at least three times in separate experiments.

**5. Calculation**

Calculation of titre (example):

| Virus dilution | positive wells | Percentage positive |
|---|---|---|
| -1 | +++++++ (8/8) | 100,0% |
| -2 | +++++++0 (7/8) | 87,5% |
| -3 | ++++++00 (6/8) | 75,0% |
| -4 | +++++000 (5/8) | 62,5% |
| -5 | ++++0000 (4(8) | 50,0% |
| -6 | +++000000 (3/8) | 37,5% |
| -7 | ++000000 (2/8) | 25,0% |
| -8 | +0000000 (1/8) | 12,5% |
| -9 | 00000000 (0/8) | 0,0% |
| Sum: | | 450,0% |

The positive wells tor each dilution step are indicated in percentage (see table/example); in the end all percentage values are added and inserted in the following formula (formula for $TCID_{50}$ [Tissue Cell Infection Dosage 50%]):
log10 $TCID_{50}$ = [neg. log 10 highest virus concentration]- [sum percentage positive/100-0.5] x log10 dilution factor.

The value obtained after calculation is always negative. As titre (1 $TCID_{50}$), the number is however indicated as $log_{10}$ as a positive value.

The lower level for indication of the titre is positive with four wells. If only three or less wells are positive, the value is indicated as smaller than or equal to 1 (≤1.0).

If deviations from the already known titre (titre control) are observed, the courses thereof must be determined. Possibly, the experiment cannot be used for evaluation.

Example (see numbers of table)

$$\mathrm{log10TCID_{50}} = -1 - (450 : 100 - 0,5) \times 1$$

$$\mathrm{log10TCID_{50}} = -1 - (4,5 - 0,5)$$

$$\mathrm{log10TCID_{50}} = -1 - 4$$

$$\mathrm{log10TCID_{50}} = -5$$

$$1\ \mathrm{TCID_{50}} = 10^{5,0}$$

Reduction factor

The efficacy of the disinfectant is given by the reduction factor (RF).

Calculation of reduction factor:

Except for the positive- and negative control, the reduction factor is indicated. The logarithm of the calculated titre of the sample treated with the respective disinfectant is subtracted from the logarithm of the infection titre (which is the untreated virus titre) [positive control] determined de novo for each experiment. This difference is the reduction factor. The higher the reduction factor the more efficient the tested disinfectant. The lower the reduction factor the less efficient is the disinfectant. Also the reduction factor is indicated as an exponential having 10 as a base ($10^{reduction\ factor}$). Also the cytotoxicity control must be observed when titre and reduction factors are indicated.

Cytotoxicity

The cytotoxicity (negative control) is indicated in log-steps, i.e. even if in the respective steps only one well is positive, the respective disinfectant at this concentration must not be taken into account for this step.

**f) Efficacy against Polio virus - quantitative suspension tests**

1. Required Materials:

1.1. Test Virus: Polio - 1 - LS c - 2 ab - Virus (WHO); concentrate thereof

1.2. Instruments and Materials:

- Millipore Ultrafree-4 and Amicon Ultra-4-centrifuge-filter units having a Biomax-100K-membrane
- Bender and Hobein AG - Vortex
- Eppendorf Thermomixer Comfort
- Heraeus Cryofuge 5000
- Eppendorf tubes having 2 ml capacity for incubation in thermomixer
- sterile dilution tubes (Sarstedt 5 ml tube) and DeepWell plates (Nunc) with corresponding lid (sterile) for dilutions
- Sarstedt 15 ml-tube for preparation of disinfectant solution
- Eppendorf-one-channel pipette (10 $\mu$l - 100 $\mu$l, 20 $\mu$l - 200 $\mu$l, 100 $\mu$l - 1000 $\mu$l, 500 $\mu$l - 5000 $\mu$l) and Capp-multi-channel pipette (20 $\mu$l - 200 $\mu$l) with sterile tips which have been additionally stuffed (for virus pipetting)
- ice for cooling PBS and Amicon vessels
- prepared 96 Well plates (company Costar, previously sterile packed) having monolayer (L20B - transgenic mouse cells)
- $CO_2$-incubator, 37°C, humidity conditioning: Labotect and Heraeus
- benches from Baker and Thermo Electron LED
- freezer -20°C Liebherr

1.3. Chemicals:

- PBS pH 7.2
- disinfectant to be tested
- sterile Aqua bidest
- 0.1 M phosphate buffer pH 7.0
- MEM Hanks Salt Medium with Hepes buffer + 2 % FCS + 1 % Glutamine + 1 % Penicillin/Streptomycin + 1 % non-essential amino acids + 0.8 % $NaHCO_3$

2. Experiment:

2.1. Preparation of disinfectants

For the preparation of the disinfectants see example 1.
The disinfectant to be tested is diluted using Aqua bidest or 0.1 M phosphate buffer on the day of the experiment. The dilutions are prepared such that the concentration of the disinfectant is achieved in the experiment.

All solutions are incubated for at least 20 minutes in the thermomixer.

2.2. Experiments

The virus concentrate is filtered (using a 0.2 μm filter) and pre-diluted, depending on the concentration known (titre) using PBS.

Amounts for 2.0 ml final volume:

|  |  |
|---|---|
| a) Sample: | 0.2 ml virus suspension + 1.8 ml disinfectant |
| b) Positive control : | 0.2 ml virus suspension + 1.8 ml PBS |
| c) Negative control : | 0.2 ml PBS + 1.8 ml disinfectant |

All samples are mixed for 20 seconds and kept at 20°C at 300 RPM in the thermomixer for the times indicated in the experiment protocol.

2.3. Controls

The positive control is a virus titre control. Hence, the titre already known should be reached in each test again. If there are significant deviations, one should test whether or not the virus can no longer be used or whether the cell quality is not sufficient in order to reach the titre again.

In each suspension test, formaldehyde is also tested as a reference in two different concentrations (normally 1.0 % and 0.7 %) as controls. These controls are treated like the remaining experiments ("neutralized" via Amicon-filter).

For each concentration of the disinfectant used, a cytotoxicity control must also always be performed in order to recognize possible effects of the pure disinfectant onto the cells (in the experiments in the respective log-step, these effects might not be distinguishable from cytopathic effects caused by the virus). If cytotoxicities occur, the respective log-step may not be relied upon in the experiment.

It should also be noted that never two "highest virus concentrations" may be applied next to each other. Always the "lowest virus concentration" or a cell control must be applied next to a "high" virus concentration in order to avoid false positive results caused by splashing.

For each plate, a cell control must be performed as well (see 2.5.2 below).

2.4. "Neutralization" by dilution and filtration

2.4.1. Filtration via Amicon-centrifuge units

After completion of exposure time, the entire volume of the sample is pipetted to 3 ml PBS into the Ultrafree-4 (Amicon Ultra-4) filter unit which has been kept ice-cold.

It should be noted that with experiments involving ethanol, there is no filtration but there is a direct dilution from the experiment that has been thoroughly mixed again.

5 minutes centrifugation at 5000 x g at 20°C. Thereafter, there is a rinse using 5 ml PBS and another centrifugation as indicated above.

Thereafter, the concentrate (amount to be recorded in the protocol) is replenished with medium (supplemented with 2 % FCS, 1 % L-Glutamine, 1 % Penicillin/Streptomycin, 1 % non-essential Amino acids and 0.8 % NaHCO$_3$) to the original amount of the experiment (i.e. 2.0 ml, 1.5 ml or 1.0 ml) and vortexed for at least 20 seconds.

2.4.2. Direct dilutions

For each disinfectant (in all concentrations) which is "neutralized" via an Amicon-filter, there must be once a direct dilution without filtration in order to check that there are no losses occurring via the filter. Samples containing ethanol are always directly diluted since protein precipitations clog up the filter and lead to significant losses, and the Amicon-filters are not suitable for ethanol concentrations > 70 %.

In the direct dilution, 0.2 ml are removed from the sample after completion of the exposure time and diluted into 1.8 ml medium (for dilutions in DeepWell plates, 0.1 ml are removed and diluted in 0.9 ml medium), and the further dilution series is prepared.

2.5. Titrations

2.5.1. Titration series

Dilutions are prepared in 1:10-steps using medium as diluent. The total amount in each log-step is either 2.0 ml (1.8 ml medium + 0.2 ml sample added or + 0.2 ml previous dilution or (for DeepWell plates because of better mixing) 1.0 ml (0.9 ml medium + 0.1 ml sample added or + 0.1 ml previous dilution. After each dilution, vortexing is performed (dilution tubes) or the liquid is taken up 20-30 times in a multi-channel pipette (DeepWell plate), and only thereafter pipetting is continued.

2.5.2. Applying test solutions onto plate

0.1 ml sample per well are applied to a prepared 96 well plate. The cell lawn must be thin and closed (monolayer), each well contains 0.1 ml medium (MEM Hanks Salt Medium and Hepes buffer supplemented with 10 % FCS, 1 % L-Glutamine, 1 % Penicillin/Streptomycin, 1 % non-essential amino acid and 0.8 % $NaHCO_3$) in which the cells have grown. To this volume, 0.1 ml are added from the dilution, and the final volume on the plate per well is 0.2 ml. Each log-step is applied eight times to the plate.

In each plate, there must be at least eight adjacent (one row) wells as a cell control, onto which only medium (supplemented with 2 % FCS, further supplements as indicated above) has been added. In order to prevent unspecific reaction of cells on the plate, the cells must have healthy appearance on the day of evaluation.

2.5.3. Incubation

Subsequently, the 96 Well plates are wrapped in cling film and incubated for five days at 37°C and 5 % $CO_2$. Thereafter, the experiment is recorded.

3. Recording

The protocol must indicate experiment number, experiment date, recordal date, used virus (date of pooling, dilution), cell type, exposure time, used disinfectant and concentration thereof, exposure temperature.

The protocol contains an evaluation for all wells of all samples and controls whether or not there has been a beginning, a complete or no cytopathic effect (CPE). Usually, the following symbols are used: + (complete CPE), - (no CPE) and (+) (beginning CPE).

All wells must be recorded for all samples.

4. Calculation:

Calculation of titre (see above)

**g) Efficacy against hepatitis A virus - quantitative suspension tests**

Test virus: Hepatitis A-virus

1. Instrumental materials:

- Bender und Hobein AG - Vortexer
- Eppendorf Thermomixer Comfort
- Heraeus Cryofuge 5000
- $CO_2$-Incubator, 37°C, humidity conditioning by Labotect und Heraeus
- benches from companies Baker und Thermo Electron LED
- Freezer -20°C Liebherr
- Millipore Ultrafree-4 and. Amicon Ultra-4 Centrifugal-Filter-devices having a Biomax-100K Membran
- Eppendorf- single channel pipettes (10 µl - 100µl, 20 µl - 200 µl, 100 µl - 1000 µl, 500 µl - 5000 µl) and Capp - multi channel pipette (20µl - 200 µl) with tips which are sterile and, for virus pipetting, have been additionally stuffed
- Eppendorf tubes having 2 ml capacity for incubation in thermomixer
- sterile dilution vessels (Sarstedt 5 ml tube) and. DeepWell-plates (Nunc) corresponding closing lid (sterile) for dilutions

- Sarstedt 15 ml - tubes for preparation of disinfectant solutions
- prepared 96 Well plates (Costar, sterile packed) having monolayer of Rh/K-cells (kidney cells from Rhesus monkeys),
- Ice for cooling PBS and amicon vessels

## 2. Chemicals:

| Maintenance medium: | MEM Hanks Salt Solution with Hepes buffer, *GIBCO* |

- 5 % foetal calf serum, company. PAA
- 1% L- Glutamin, company ICN
- 1% antibiotics (AB), consisting of Penicillin + Streptomycin, Company PAA
- 1 % Non-essential amino acids: Biocrom AG
- 0,8 % $Na_2HCO_3$

- disinfectant to be tested

- PBS pH 7.2
- sterile aqua bidest.
- 0,1 M phosphate buffer pH 7,0

## 3. Experiment:

### 3.1 Preparation of disinfectants solutions

The disinfectant to be tested is diluted using aqua bidest or 0.1 M phosphate buffer on the day of the experiment. The dilutions are prepared such that the final concentration of the disinfectant is achieved in the actual experiment.
The solutions are incubated in the thermomixer at 20°C for at least 20 minutes.

3.2 Preparation of test samples

Virus concentrate is filtered (using a 0.2 $\mu$m filter) and is used prediluted with PBS if concentration is known (titre) or is used undiluted if the initial concentration is very low (titre $\leq 10^{6.0}$).

Amounts for 1.0 ml final volume:

| a) sample: | 0.1 (0.05) ml virus suspension + 0.9 (0.45) ml disinfectant |
| b) titre control: | 0.1 (0.05) ml .virus suspension + 0.9 (0.05) ml PBS |
| c) cytotoxicity control: | 0.1 (0.05) ml PBS + 0.9 (0.05) ml disinfectant |

The samples are mixed for 20 seconds and are exposed at 20°C in a thermomixer at 300 rpm for the time period in minutes indicated in the experiment.

3.3 Controls

Titre control: Control of titre of used virus suspension, formaldehyde control
In each suspension test, formaldehyde is also tested in two different concentrations (2.0% and 0.7%). These controls are treated like the other experiments (always "neutralized" via an amicon-filter).

Cytotoxicity control:

A cytotoxicity control is performed with respect to all concentrations of all used disinfectants in order to recognize possible effects of the disinfectant on the cells (in the experiments in the respective dilution step, this might not be distinguishable from cytopathic effects caused by the virus).

Cell control:

On each plate in at least 8 wells, there must be a cell control (see below 3.5.2).

3.4 "Neutralization" by dilution and filtration

3.4.1 Filtration using amicon - filter unit

After completion of exposure time 0.9 ml of sample is pipetted to 4 ml PBS in the (ice cold ultrafree-4-Amicon ultra-4) filter unit.
It should be noted that in experiments involving alcohols, there is no filtration but there is a direct dilution from the thoroughly mixed sample (see 3.4.2).
Centrifugation for 5 minutes at 5000 x g at 20°C. Thereafter rinse with 5 ml PBS and centrifuge again as indicated above.
The residue on the filter (amount must be recorded in the protocol) is replenished with maintenance medium to the initial amount of the sample (0.9 ml) and mixed for at least 20 seconds on a vortex.

3.4.2 Direct dilution

To check that the result is not influenced by the filtration, in each series of experiments an experiment is performed with direct dilution without filtration. Experiments with ethanol are always perfomed using the dilution method (i.e. without filtration), since protein precipitations may clog the filters (according to the manufacturers, Amicon filters are not suitable for ethanol concentrations > 70%).
In the direct dilution, immediately after completion of the exposure time and after the sample has been mixed thoroughly again, 0.2 ml are removed and diluted in 1.8 ml medium (for dilutions in deep well plates, 0.1 ml are removed and diluted in 0.9 ml medium), and the further dilution series is prepared using a ratio of 1:10.

3.5 Titrations

3.5.1 Titration series

- Dilutions are prepared in 1:10-steps using medium as diluents.
- total amount per dilution step 2.0 ml:

    1.8 ml medium + 0.2 ml experiment or + 0.2 ml of previous dilution step:
    for deep well plates 1.0 ml:
    0.9 ml medium plus 0.1 ml experiment or plus 0.1 ml of previous dilution step.

- After each dilution mixing for at least 20 seconds on vortex (dilution tube) or mixing with multi channel pipette by taking up sample for at least 20-30 times (deep well plate), and only thereafter pipetting is continued.

3.5.2 Application to plates

0.1 ml of each dilution per well is applied to prepared 96 well plates, final volume is 0.2 ml. Cell lawn must be thin and close (mono layer). Each dilution step is applied eight times to the plate.

3.5.3 Incubation

Subsequently, the 96 well plates are wrapped in cling film and incubated for 14 days at 37°C and 5% $CO_2$. Thereafter, the experiment is evaluated.

4. Evaluation

The protocol indicates experiment number, experiment date, evaluation date, virus used (date of pooling, dilution), cell type, exposure time, used disinfectants and their concentrations, exposure temperature.

For all wells of all samples and controls, the protocol also indicates an evaluation whether or not a beginning, a complete or no cytopathic effect (CPE) is observed: + (complete CPE), (+) (beginning CPE), - (no CPE). For all samples all wells must be evaluated.

Calculation: see above

4.3 Reduction factor

The reduction factor is calculated:

logarithm of infection titre of titre control - logarithm of calculated titre of sample treated with respective disinfectant.

The higher the reduction factor, the more efficient the respective disinfectant tested. The lower the reductent factor, the less efficient the disinfectant tested. When determining the reduction factor, also the cytotoxicity control needs to be observed.

4.4 Cytotoxocity

If cytotoxicity occurs, the respective dilution steps in the experiment may not be evaluated (if for a given dilution step even only one well is positive, this step must not be taken into account for the respective disinfectant in the respective concentration).

This means that if the cytotoxicity is positive up until the same step as the respective disinfectant tested in the respective concentration, one cannot indicate a precise number for the respective disinfectant.

**The results of the studies are summarized in the following tables:**

**Tab. 1 Efficacy of tested formulations on bacteria when applied in the carrier test with blood as test soil for 5, 20 or 60 minutes at 20°C**

| test organism / formulation | *E. faecium* in blood | *M. avium* in blood |
|---|---|---|
| | Quantitative carrier test | Quantitative carrier test |
| 0.2% SDS – 0.3% NaOH | RF 0 / 5 Min. <br> RF 0 / 20 Min. <br> RF 0,27 / 60 Min. | RF 0 / 20 Min. |
| 0.2% SDS – 0.3% NaOH in 50% Ethanol | RF 0,74 / 5 Min. <br> RF > 6 / 20 Min. <br> RF > 6 / 60 Min. | RF > 6 / 20 Min. |
| 0.2% SDS – 0.3% NaOH in 20% n-Propanol | RF 0,72 / 5 Min. <br> RF > 6 / 20 Min. <br> RF > 6 / 60 Min. | RF > 6 / 20 Min. |
| 50% Ethanol | RF 0,14 / 5 Min. <br> RF > 6 / 20 Min. <br> RF > 6 / 60 Min. | RF ≥ 6 / 20 Min. |
| 20% n-Propanol | RF 0,20 / 5 Min. <br> RF > 6 / 20 Min. <br> RF > 6 / 60 Min. | RF ≥ 6 / 20 Min. |

The formulations were examined in a quantitative carrier test (instrument disinfection test) with coagulated blood as test soil (method as established at the Robert Koch-Institut). The reduction factor is indicated with reference to a control (i. e. water without the formulation to be tested). The particular efficacy of 0.2% SDS - 0.3% NaOH in 20% n-propanol on E. faecium and M. avium in the instrument disinfection (20 minutes) is to be emphasized. The formulation of SDS-NaOH without alcohol has no significant inactivating effect. The carrier test with bacteria in blood represents more stringent conditions than the suspension test, i.e. all formulations active in the carrier test are also at least as active in the quantitative suspension test (data not shown).

**Tab. 2 Efficacy of tested formulations on viruses when applied in suspension with or without interfering substance (organic load: 10% FCS) for 5 or 20 minutes at 20°C**

| test virus / Formulation | Poliovirus | *HAV* |
|---|---|---|
| 0.2% SDS – 0.3% NaOH | RF < 4 (RKI, 20 min) | RF ≤ 1 (5 min)<br>RF < 4 (20 min)<br>RF > 4 (20 min, with interfering substance/ organic load) |
| 0.2% SDS – 0.3% NaOH in 50% Ethanol | RF 4,33 +- 0,52 (5 min)<br>RF 5,25 +- 0,51 (20 min)<br>RF > 5 (RKI, 20 min) | RF > 4 (5 min)<br>RF > 4 (20 min)<br>RF > 4 (20 min, with interfering substance/ organic load) |
| 0.2% SDS – 0.3% NaOH in 30% n-Propanol | RF 4,67 +- 0,42 (5 min)<br>RF 4,83 +- 0,42 (20 min)<br>RF > 4 (RKI, 20 min) | RF > 4 (5 min)<br>RF 3,84 (20 min)<br>RF > 4 (20 min, with interfering substance/ organic load) |
| 0.2% SDS – 0.3% NaOH in 20% n-Propanol | RF > 4 (RKI, 20 min) | RF 3,58 (5 min)<br>RF 3,49 (20 min)<br>RF > 4 (20 min, with interfering substance/ organic load) |
| 50% Ethanol | RF < 1 (RKI, 20 min) | RF < 1 (RKI, 20 min) |
| 30% n-Propanol | RF < 0,5 (RKI, 20 min) | RF < 1 (RKI, 20 min) |
| 20% n-Propanol | RF < 0,5 (RKI, 20 min) | RF < 1 (RKI, 20 min) |

The formulations were tested in a quantitative suspension test as established at the Robert Koch-Institut (see above). The reduction factors (RF) are indicated, each time with reference to the control (i. e. water without formulation to be tested and with or without protein load; 10% FCS). The efficacy of 0.2% SDS - 0.3% NaOH in 20% n-propanol (5 and 20 minutes) on polio and hepatitis A virus (HAV) in a suspension with organic load is to be emphasized. Polio- and hepatitis A virus are human pathogenic viruses which are most resistant against common available disinfectants as well as against the tested formulations (vaccinia virus, adenovirus and SV40 were found to be less resistant; data not shown). Ethanol or propanol do not have a significant inactivating effect on these viruses.

**Tab. 3 Efficacy of tested formulations on polio virus when applied in the carrier test with blood for 5, 20 or 60 minutes at 20° C**

| test organism<br><br>formulation | *Poliovirus in blood* |
|---|---|
| | **Quantitative carrier test** |
| **0.2% SDS – 0.3% NaOH** | RF 3.9 (5 min)<br>RF 4.0 (20 min)<br>RF 4.1 (60 min) |
| **0.2% SDS – 0.3% NaOH in 50% Ethanol** | RF ≥ 5.3 (5 min)<br>RF ≥ 5.5 (20 min)<br>RF ≥ 5.5 (60 min) |
| **0.2% SDS – 0.3% NaOH in 20% n-Propanol** | RF 4.6 (5 min)<br>RF ≥ 5.3 (20 min)<br>RF ≥ 5.5 (60 min) |
| **50% Ethanol** | RF ≤ 1.2 (20 min)<br>RF ≤ 1.0 (60 min) |
| **20% n-Propanol** | RF ≤ 1.3 (20 min)<br>RF 2.0 (60 min) |

The formulations were examined in a quantitative carrier test (instrument disinfection test as established at the Robert Koch-Institut) with coagulated blood as described above. The reduction factor are indicated with reference to a control (i. e. water without the formulation to be tested). The particular efficacy of 0.2% SDS - 0.3% NaOH in 20% n-propanol on Poliovirus in the instrument disinfection test is to be emphasized. 20% n-propanol alone is inefficient.

## Example 4

**Decontamination efficiency of SDS (0.2 %) / NaOH (0.3 %) in combination with alcoholic components on PrP^Sc bound to steel surfaces**

**In vitro and in vivo studies**

**a) Materials**

*Reagents for decontamination*

The following reagents were tested for their decontaminating activities on steel wires coated with 263K scrapie brain homogenate (for providers and further details see: Lemmer et al., 2004): ethanol (70 %), the mixture of sodium hydoxide (NaOH, 0.3 %) and sodium dodecyl sulfate (SDS, 0.2 %) (Lemmer et al., 2004); the SDS / NaOH components in 50 % ethanol as well as in 30 % ethanol; the SDS / NaOH components in 50 %, 30 % or 20 % n-propanol, respectively. Distilled water served as a control.

**b) Methods**

*In vitro carrier assay*

A stock of 10 % 263K scrapie brain homogenate, containing ~$10^8$ 50% intracerebral lethal doses (LD$_{50i.c.}$) of 263K agent and ~10 $\mu$g of pathological prion protein (PrP^Sc / PrP27-30) per ml. was prepared from brains of Syrian hamsters in the terminal stage of scrapie (Beekes et al., 1995, 1996), aliquoted and stored at -70°C. Stainless steel wire (DIN-No. 1.4301, Forestadent, Pforzheim, Germany; diameter: 0.25 mm) was cut in small pieces of defined length (5 mm). These wire pieces (in the following called "wires") with a surface of ~4 mm$^2$ ($2\pi rh + 2\pi r^2$) were washed in 2 % Triton X-100 for 15 min under constant ultrasonication (Sonorex RK 102 P; Bandelin Electronics), rinsed in distilled water, dried and sterilized in a steam autoclave at 121 °C for 20 minutes. In order to contaminate the carriers *in vitro* with PrP^Sc / PrP27-30, batches of 30 wires were incubated in 150 $\mu$l 10 % scrapie brain homogenate for 2 h under constant shaking at 37°C with 700 r.p.m. in a thermomixer (Amersham Biosciences). Following removal of the homogenate, wires were transferred to and placed separately from each other in Petri dishes, air-dried for 1 h, and stored over night (~16 h) at room temperature. Subsequently, batches of 30 contaminated wires were incubated, in a volume of 1.5 ml, in the reagents to be tested for decontaminating activity. These incubations were performed in a thermomixer (400 r.p.m.) at 23°C for the times specified in the legend of Figures 1-3. Finally, the wire batches were rinsed in distilled water for 1x1 min followed by 4 x 10 min in a volume of 45 ml each under constant shaking at room temperature. Processing of wires was finished by air-drying in Petri dishes for 1 h, storing over night (~16 h) at room temperature, and recollection of batches in test tubes. Residual prion-protein contaminations of wires, which were still present after processing as outlined above, were eluted from the carrier surface as follows: Half the number of the various batches independently processed per test reagent were boiled for 5 minutes in 52 $\mu$l of electrophoresis sample loading buffer (62.5 mM Tris, pH 6.8, 10 % glycerol, 5 % mercaptoethanol, 2 % SDS, 0.025 % bromphenol blue) containing 4 M urea; the remaining batches were treated with 150 $\mu$g PK ml$^{-1}$ in a volume of 52 $\mu$l of TBS-sarcosyl (50 mM Tris/HCl, 150 mM NaCl, pH 7.5, 1 % Sarcosyl) for 1h at 37°C, subsequently mixed with an equal volume of 2 x sample loading buffer containing 8 M urea, and boiled for 5 min. Aliquots of wire eluates (20 $\mu$l) were removed (leaving the wires on the bottom of the tube) and analysed by SDS-PAGE and Western blotting for the presence of prion protein.

*SDS-PAGE and Western blotting*

SDS-PAGE and Western blot analyses using the monoclonal anti-PrP antibody 3F4 (Kascsak, R.J., Rubenstein, R., Merz, P.A., Tonna-Demasi, M, Fersko, R., Carp., R.I., Wisniewski, H.M. & Diringer, H. (1987). J. Virol. 61, 3688-3693) were performed as described elsewhere (Beekes et al., 1995, 1996) with recently published modifications (Thomzig et al., 2003). PrP signals were visualized on a X-OMAT AR film (Kodak, Sigma-Aldrich, Steinheim, Germany) after various exposure times individually adjusted to optimize the signal-to-noise ratio of each blot. Molecular mass (MW) marker proteins of 14.4, 20.1, 30.0, 45.0, 66.0 and 97.0 kDa were used (Amersham Biosciences). PK-digested homogenate from scrapie hamster brains, used as internal PrP27-30 standards in the Western blot analyses (see Figures 1-3: $10^{-6}$ or $10^{-7}$ g brain tissue), were prepared as outlined previously (Beekes et al., 1995; Thomzig et al., 2003). Based on the infectivity titre and content of PrP$^{Sc}$ determined previously in brain homogenates from our 263K scrapie hamsters (Beekes et al., 1995, 1996), 1 x $10^{-6}$ g of scrapie-infected hamster brain homogenate contains ~1-3 x $10^3$ LD50$_{i.c.}$, and, after digestion with PK, ~100 pg of PrP27-30. The processed batches of 30 wires represented a total steel surface of 120 mm$^2$ each. To facilitate quantification and comparison of PrP immunostaining, the amount of sample material blotted in Figures 1-3 is specified by the wire area [mm$^2$] it corresponded to.

It should be noted that cellular PrP (PrP$^C$), which is present at significant levels in scrapie brain homogenate, may contribute partially to PrP immunostaining in samples not subjected to PK treatment and treated with reagents unable to interfere with cellular proteins, e. g. in case of distilled water.

### *In vivo* carrier assay

In order to contaminate the carriers with PrP$^{Sc}$ / PrP27-30 for the *in vivo* experiments, batches of 12 wires of 4 mm length each were incubated in 150 μl 10 % scrapie brain homogenate as described above. Subsequently, the 263K contaminated wires were incubated in a volume of 1.5 ml with 0.2 % SDS and 0.3 % NaOH in 30 % n-propanol as well as 0.2 % SDS and 0.3 % NaOH in 20 % n-propanol for 10 min at 23°C. These two solutions were selected for *in vivo* validation, only. The reason for this selection is based I) on the results of the *in vitro* carrier assay, which suggested in case of both solutions sufficient decontamination efficiency resulting from destabilization and detachment of PrP$^{Sc}$ from the wire surface (Figure 3), II) on the results of the decontamination studies with various bacteria and viruses (Tables 1-4), and III) the aim to use low alcohol concentrations only. The mixture of SDS/NaOH alone did not contribute to the reduction of bacteria, whereas in combination with ≥ 20 % n-propanol a reduction >6 log steps was achieved e. g. with bacteria even after 5 min incubation in the suspension assay (Table 1).

The decontamination step was performed in a thermomixer (400 r.p.m.) at 23°C for 10 min. In parallel, PrP$^{Sc}$ contaminated wires were incubated in distilled water, only, for 10 min at 23°C. After the decontamination procedures the wires were rinsed in distilled water (five times in 45 ml), air-dried in Petri dishes for 1 h and stored over night (~16 h) at room temperature. The wires were now ready for implantation into the brain of the laboratory animals for bioassay. Approximately 8-week-old Syrian hamsters (Charles River Laboratory) were used in the experiment. Implantation was done with a stereotaxic apparatus (Stoelting, Wood Dale, Illinois, USA). The hamsters (weight: 80 - 120 g) were sedated with isofluran for anaesthesia by intramuscular injection of 0.2-0.4 ml of a mixture of 10 % ketamin and 2 % xylazin. Final concentrations of 11 mg xylazin / kg of body weight and 190 mg ketamin / kg of body weight were administered to the animals. Anesthetized hamsters were placed in the stereotaxic apparatus using ear bars with short tips. One wire was implanted into each animal at the following coordinates: bregma, -2 mm / mediolateral, 2 mm (Yan, Z.X., Stitz, L., Heeg, P., Pfaff, E. & Roth, K. (2004). Infect Control Hosp Epidemiol 25, 280-283). For exact dorsoventral positioning of the wires in a depth of 4 to 8 mm (upper end and lower end, respectively) below the outer skull surface we used a specially crafted needle with a mandrel as a pushing bar (Hero, Berlin, Germany). All recipients of wires were marked with a transponder. The intracerebral implantation of wires was well tolerated by the animals and never caused complications due to the invasive intervention.

Hamsters were monitored at least twice a week for clinical signs of scrapie. The individual disinfectants have been tested in two independent animal groups, each of six hamsters. The control group was carried out with six hamsters which received the wires treated with distilled water, only. When terminally affected with scrapie (a disease stage which is accompanied by fully developed clinical symptoms and indications that the animals become unable to take up sufficient quantities of drinking water) hamsters were sacrificed by CO$_2$ asphyxiation.

### *Endpoint titration*

For endpoint titration wires were incubated as described above in 263K scrapie hamster brain homogenates that had been serially diluted in logarithmic steps in normal brain homogenate over a range from 1x$10^{-1}$ to 1x$10^{-9}$. Wires were air-dried in Petri dishes for 1 h, stored over night (~16 h) at room temperature and rinsed in distilled water (1 x 1 min, followed by 4 x 10 min in a volume of 45 ml each) in order to remove unfixed tissue debris that may have affected the titration by being unevenly attached to different carriers. Prior to implantation wires were again air-dried in Petri-dishes. Survival times and attack rates for the development of terminal scrapie were monitored in hamsters for an observation period of 500 days after wire implantation. The endpoint dilution of infectivity was calculated from the observed rates of terminal scrapie per dilution according to the Spearman-Kärber method as described by Bonin (Bonin, O. (1973). Quantitativ-virologische Methoden. Pp. 183-186. Stuttgart: Georg Thieme Verlag).

*PET blot analysis*

PET blot analysis of PrP$^{Sc}$ deposition in coronal brain slices was performed as described elsewhere (Schulz-Schaeffer et al., 2000; Thomzig et al. 2004) in order to detect sublinical scrapie infections in animals that did not show an onset of disease during the period of clinical observation in the endpoint titration experiment. For PET blotting brains were cut coronally in 4 blocks. The brain tissue block containing the wire was fixed in 4 % paraformaldehyde (PFA), while the remaining blocks were stored at -70°C. After fixation, the wire was removed. In order to avoid tissue damage in the area of the wire channel, in most cases the upper part of the tissue block was separated from the lower part by a horizontal cut near the upper wire end before the steel carrier was removed. The tissue blocks with the wire channels (and, if prepared, their upper counterparts) were embedded in paraffin, and 6 $\mu$m coronal sections of the specimens containing the wire channels were cut on a microtome. Tissue sections were fixed on a nitrocellulose membrane (BioRad) by drying over night at 55°C. After deparaffinization, rehydration, drying ($\geq$20 min) and prewetting in TBS/Tween (TBST) the blots were incubated with 15 $\mu$g/ ml proteinase K for 2 h at 55°C. Following washing in TBST and denaturation by exposure to 3 M guanidine thiocyanate for 10 min PET blots were incubated with the primary monoclonal antibody 3F4 (1:2500) over night. Negative controls were incubated with normal mouse serum (Dako, Denmark) diluted 1:25000. Visualization of labelled PrP$^{Sc}$ was performed with an alkaline phosphatase-coupled rabbit anti mouse antibody (Dako, diluted 1:2000) using BCIP/NPT (AppliChem GmbH, Darmstadt, Germany) as substrate. Stained PET blots were examined with a Leica binocular MS 5 and scanned with Microtec Scan Wizard 5.

**References for Example 4 a) and b)**

Baxter R. L., Baxter, H. C., Campbell, G.A., Grant, K., Jones, A., Richardson, P. & Whittaker, G. (2006). Quantitative analysis of residual protein contamination on reprocessed surgical instruments. J Hosp Infect 63, 439-444.
Beekes, M., Baldauf, E., Caßens, S., Diringer, H., Keyes, P., Scott, A. C., Wells, A. H., Brown, P., Gibbs, C. J. Jr. & Gajdusek, D. C. (1995). Western blot mapping of disease-specific amyloid in various animal species and humans with transmissible spongiform encephalopathies using a high-yield purification method. J Gen Virol 76, 2567-2576.
Beekes, M., Baldauf, E. & Diringer, H. (1996). Sequential appearance and accumulation of pathognomonic markers in the central nervous system of hamsters orally infected with scrapie. J Gen Virol 77, 1925-1934.
Bertram, J., Mielke, M., Beekes, M., Lemmer, K., Baier, M. & Pauli, G. (2004). Inactivation and removal of prions in producing medical products. A contribution to evaluation and declaration of possible methods. Bundesgesundheitsblatt Gesundheitsforschung Gesundheitsschutz 47, 36-40.
Bonin, O. (1973). Quantitativ-virologische Methoden. pp. 183-186. Stuttgart: Georg Thieme Verlag
Kascsak, R.J., Rubenstein, R., Merz, P.A., Tonna-Demasi, M, Fersko, R., Carp., R.I., Wisniewski, H.M. & Diringer, H. (1987). Mouse polyclonal and monoclonal antibody to scrapie-associated fibril protein. J Virol 61, 3688-3693.
Lemmer, K., Mielke, M., Pauli, G. & Beekes, M. (2004). Decontamination of surgical instruments from prion proteins: in vitro studies on the detachment, destabilization and degradation of PrPSc bound to steel surfaces. J Gen Virol 85, 3805-3816.
Saa, P., Castilla, J. & Soto, C. (2006). Presymptomatik detection of prions in blood. Science 313, 92-94.
Schulz-Schaeffer, W. J., Tschoke, S., Kranefuss, N., Drose, W., Hause-Reitner, D., Giese, A., Groschup, M. H. & Kretzschmar, H. A. (2000). The paraffin-embedded tissue blot detects PrP(Sc) early in the incubation time in prion diseases. Am J Pathol 156,51-56.
Thomzig, A., Kratzel, C., Lenz, G., Krüger, D. & Beekes, M. (2003). Widespread PrPSc accumulation in muscels of hamsters orally infected with scrapie. EMBO reports 4, 530-533.
Yan, Z.X., Stitz, L., Heeg, P., Pfaff, E. & Roth, K. (2004). Infectivity of prion protein bound to stainless steel wires: a model for testing decontamination procedures for transmissible spongiform encephalopathies. Infect Control Hosp Epidemiol 25, 280-283

**c) Results**

*In vitro carrier assay*

In contrast to the Western blot results obtained with the mixture of 0.2 % SDS and 0.3 % NaOH, in which almost no PrP was detectable in the samples without PK digestion and no more PrP$^{Sc}$ was detectable after PK digestion (Figure 1A), latter known to be detached and destabilized by the mixture (Lemmer et al, 2004), PrP$^{Sc}$ seems virtually completely resistant against 70 % ethanol. The protein fixating effect of ethanol was clearly demonstrated by very strong Western blot signals. Intense signals were also obtained with the control samples, but always less strong than observed after ethanol treatment. These differences result from the detaching effect of water, which however is limited by drying the wires after contamination (Lemmer et al., 2004).

Reduction of the ethanol concentration down to 50 % and addition of 0.3 % sodium hydroxide and 0.2 % SDS reduced the load of PrP attached to the steel surfaces in a time dependent manner, and remaining PrPSc had become PK sensitive (Figure 2A). Combining SDS and NaOH with 50 % n-propanol, only traces of PrP were detectable in the Western blot after 5 min of incubation, and, as with 50 % ethanol, no more PK resistant PrPSc was detectable. Reduction of the alcoholic component to 30 % or 20 % accelerated the reduction of the PrP as demonstrated for n-propanol after 5 min of incubation. The results suggested that the fewer the percentage of alcohol the better the cleaning of the steel surface and the detachment of destabilized PrPSc. Since low concentrated n-propanol (30 % and 20 %) combined with SDS and NaOH was able to reduce the infectivity of bacteria and viruses about > 6 or > 4 log steps, respectively, this solution is suggested as a candidate of choice for validation in the prion bioassay, which is still the most sensitive method to detect TSE infectivity.

**Endpoint titration**

In order to define the sensitivity of the steel wire bioassay and to establish a dose-response relationship for the assessment of titre reductions achieved by the tested decontamination procedures we performed an endpoint titration experiment. Sets of wires were incubated in 150 $\mu$l of 263K scrapie brain homogenate diluted in the range from $1 \times 10^{-1}$ to $10^{-9}$, and after coating and drying wires were irrigated in water and again air-died. Following cerebral implantation of the wires survival times and attack rates for the development of terminal scrapie were monitored in hamsters for an observation period of 500 days. The results are summarized in Table 4.

The scrapie brain homogenate used for the endpoint titration was produced from donor hamsters in the terminal stage of scrapie. As demonstrated repeatedly in our laboratory during the last two decades such brain tissue contains an infectivity titre of about $10^9$ 50% lethal intracerebral doses ($LD_{50i.c.}$) per gram of tissue. The endpoint titration experiment revealed that the dilution of scrapie brain homogenate leading to one 50% lethal dose of infectivity upon intracerebral implantation ($LD50_{i.c.imp}$) of wires prepared as described above should be $10^{-6.5}$. Therefore, carriers incubated in the $1 \times 10^{-7}$ dilution of the scrapie brain homogenate were associated with about 0.3 $LD50_{i.c.imp}$ per wire. Accordingly, wires coated with the $1 \times 10^{-1}$ diluted scrapie brain homogenate can be expected to carry an initial infectious load of about $3 \times 10^5$ ($10^{5.5}$) $LD50_{i.c.imp}$.

In none of the animals, which survived free of scrapie symptoms until the end of the endpoint titration experiment a subclinical TSE infection could be detected by PET blotting.

**Table 4**

| 263K scrapie brain homogenate | | Steel wire bioassay | | | |
|---|---|---|---|---|---|
| Dilution factor | Titre [$LD_{50i.c.}$/ml] | Infectivity in coating prep. [$LD_{50i.c.}$] | Infectivity per wire [$LD_{50i.c.imp}$] | Attack rate for terminal scrapie | Survival time [dpim] |
| $1 \times 10^{-1}$ | $1 \times 10^8$ | $1.5 \times 10^7$ | $3 \times 10^5$ | 6/6 | $94 \pm 4$ |
| $1 \times 10^{-2}$ | $1 \times 10^7$ | $1.5 \times 10^6$ | $3 \times 10^4$ | 6/6 | $100 \pm 6$ |
| $1 \times 10^{-3}$ | $1 \times 10^6$ | $1.5 \times 10^5$ | $3 \times 10^3$ | 6/6 | $113 \pm 7$ |
| $1 \times 10^{-4}$ | $1 \times 10^5$ | $1.5 \times 10^4$ | $3 \times 10^2$ | 6/6 | $134 \pm 17$ |
| $1 \times 10^{-5}$ | $1 \times 10^4$ | $1.5 \times 10^3$ | $3 \times 10^1$ | 6/6 | $161 \pm 64$ |
| $1 \times 10^{-6}$ | $1 \times 10^3$ | $1.5 \times 10^2$ | $3 \times 10^0$ | 5/6 | $231 \pm 80$; *502* |
| $1 \times 10^{-7}$ | $1 \times 10^2$ | $1.5 \times 10^1$ | $3 \times 10^{-1}$ | 1/6 | 198; *503* |
| $1 \times 10^{-8}$ | $1 \times 10^1$ | $1.5 \times 10^0$ | $3 \times 10^{-2}$ | 0/6 | *503* |
| $1 \times 10^{-9}$ | $1 \times 10^0$ | $1.5 \times 10^{-1}$ | $3 \times 10^{-3}$ | 0/6 | *503* |

**Endpoint titration of infectivity attached to steel wires that were coated with serially diluted 263K scrapie brain homogenates and subsequently implanted into the brain of Syrian hamsters.**

For contamination, wires were incubated in 150 $\mu$l of the serially diluted scrapie brain homogenates. $LD50_{i.c.}$: 50% lethal doses of infectivity upon intracerebral injection of homogenate; $LD50_{i.c.imp}$: 50% lethal doses of infectivity upon intracerebral implantation of wires. Attack rates for terminal scrapie are specified as number of animals that developed terminal symtoms per total number of challenged animals. Survival times until the development of terminal scrapie are provided in days post implantation (dpim; means $\pm$ SD), and survival times provided in *italics* (> 500 dpim) refer to hamsters that were sacrificed at the indicated time points without having developed clinical symptoms of scrapie.

*In vivo carrier assay*

The animal experiment is still going on. Till now, at more than 250 dpim, all animals which received wires treated with 30 % or 20 % n-propanol containing 0.2 % SDS and 0.3 % NaOH are alive without any symptoms of preclinical TSE. In contrast, the animals of the control group reached the terminal stage of TSE after a mean survival time of 86 dpim. According to the results of the endpoint titration achieved so far (Table 4) it can be preliminarily assumed that the mixtures caused a reduction of prion infectivity of at least 4 logs (i. e. a reduction of ≥ 99,99% of the original prion activity). The definitive titre reduction can be determined only after termination of the bioassay experiment after 500 dpim, but on the basis of the data available so far a titre reduction of at least 5 logs appears probable and may be even exceeded.

**References for Example 4c)**

Baxter R. L., Baxter, H. C., Campbell, G.A., Grant, K., Jones, A., Richardson, P. & Whittaker, G. (2006). Quantitative analysis of residual protein contamination on reprocessed surgical instruments. J Hosp Infect 63, 439-444.

Beekes, M., Baldauf, E., Caßens, S., Diringer, H., Keyes, P., Scott, A. C., Wells, A. H., Brown, P., Gibbs, C. J. Jr. & Gajdusek, D. C. (1995). Western blot mapping of disease-specific amyloid in various animal species and humans with transmissible spongiform encephalopathies using a high-yield purification method. J Gen Virol 76, 2567-2576.

Beekes, M., Baldauf, E. & Diringer, H. (1996). Sequential appearance and accumulation of pathognomonic markers in the central nervous system of hamsters orally infected with scrapie. J Gen Virol 77, 1925-1934.

Bertram, J., Mielke, M., Beekes, M., Lemmer, K., Baier, M. & Pauli, G. (2004). Inactivation and removal of prions in producing medical products. A contribution to evaluation and declaration of possible methods. Bundesgesundheitsblatt Gesundheitsforschung Gesundheitsschutz 47, 36-40.

Lemmer, K., Mielke, M., Pauli, G. & Beekes, M. (2004). Decontamination of surgical instruments from prion proteins: in vitro studies on the detachment, destabilization and degradation of PrPSc bound to steel surfaces. J Gen Virol 85, 3805-3816.
Saa, P., Castilla, J. & Soto, C. (2006). Presymptomatik detection of prions in blood. Science 313, 92-94.

Schulz-Schaeffer, W. J., Tschoke, S., Kranefuss, N., Drose, W., Hause-Reitner, D., Giese, A., Groschup, M. H. & Kretzschmar, H. A. (2000). The paraffin-embedded tissue blot detects PrP(Sc) early in the incubation time in prion diseases. Am J Pathol 156, 51-56.
Thomzig, A., Kratzel, C., Lenz, G., Krüger, D. & Beekes, M. (2003). Widespread PrPSc accumulation in muscels of hamsters orally infected with scrapie. EMBO reports 4, 530-533.

From the foregoing examples it can be seen that a formulation in accordance with the present invention, comprising a detergent, an alkali hydroxide, an alcohol, preferably an alcohol having 1 to 4 C-atoms, and water, provides excellent disinfecting qualities whilst maintaining its highly potent prion decontamination qualities. The presence of the alcohol does not appear to compromise the prion decontaminating activity which is very surprising given the stabilizing and fixating effect that alcohol usually has on protein structures in general and, in particular, on the structure and tenacity of the prion protein.
The features of the present invention disclosed in the specification, the claims and/or in the accompanying drawings, may, both separately, or in any combination thereof, be material for realising the invention in various forms thereof.

**Claims**

1.   An aqueous formulation comprising:

a) a detergent ,
b) an alkali hydroxide,
c) an alcohol, preferably having 1 to 4 C-atoms, and

d) water as a solvent.

2. The formulation according to claim 1, wherein said detergent is an anionic detergent.

3. The formulation according to claim 2, wherein said anionic detergent is selected from the group comprising alkali-$(C_1$-$C_{18})$alkyl sulphates, in particular sodium dodecyl sulphate (SDS), $(C_1$-$C_{18})$alkyl benzenesulfonates, $(C_1$-$C_{18})$ alkyl sulphonates, $(C_1$-$C_{18})$alkyl phosphates and mixtures thereof.

4. The formulation according to any of the foregoing claims, wherein said detergent, preferably said anionic detergent, is present in said formulation in an amount in the range of from 0.1 % (w/v) to 1.0% (w/v) with reference to the formulation.

5. The formulation according to claim 4, wherein said detergent, preferably said anionic detergent, is present in said formulation in an amount in the range of from 0.1% (w/v) to 0.3% (w/v) with reference to the formulation.

6. The formulation according to claim 5, wherein said detergent, preferably said anionic detergent, is present in said formulation in an amount in the range of from 0.15% (w/v) to 0.25% (w/v) with reference to the formulation.

7. The formulation according to any of the foregoing claims, wherein said alkali hydroxide is selected from the group comprising NaOH or KOH or mixtures thereof.

8. The formulation according to any of the foregoing claims, wherein said alkali hydroxide is present in said formulation in an amount in the range of from 0.1 % w/v to 1.0% (w/v) with reference to the formulation.

9. The formulation according to claim 8, wherein said alkali hydroxide is present in said formulation in an amount in the range of from 0.2% (w/v) to 0.4% (w/v) with reference to the formulation.

10. The formulation according to claim 9, wherein said alkali hydroxide is present in said formulation in an amount in the range of from 0.25% (w/v) to 0.35% (w/v) with reference to the formulation.

11. The formulation according to any of the foregoing claims, wherein said alcohol, preferably having 1 to 4 C-atoms, is selected from the group comprising ethanol, n-propanol, isopropanol, 1-butanol, 2-butanol, 2-methyl-1-propanol (isobutanol), and 2-methyl-2-propanol (tert-butanol).

12. The formulation according to claim 11, wherein said alcohol is n-propanol.

13. The formulation according to any of the foregoing claims, wherein said alcohol, preferably having 1 to 4 C-atoms, preferably said n-propanol, is present in said formulation in an amount in the range of from 5% (v/v) to 50% (v/v) with reference to the formulation.

14. The formulation according to claim 13, wherein said alcohol, preferably having 1 to 4 C-atoms, preferably said n-propanol, is present in said formulation in an amount in the range of from 10% (v/v) to 35% (v/v) with reference to the formulation.

15. The formulation according to claim 14, wherein said alcohol, preferably having 1 to 4 C-atoms, preferably said n-propanol, is present in said formulation in an amount in the range of from 10% (v/v) to 30% (v/v), preferably 15% (v/v) to 25% (v/v), more preferably approximately 20% (v/v) with reference to the formulation.

16. The formulation according to claim 14, wherein said alcohol, preferably having 1 to 4 C-atoms, preferably said n-propanol, is present in said formulation in an amount in the range of from 20% (v/v) to 40% (v/v), preferably 25% (v/v) to 35% (v/v), more preferably approximately 30% (v/v) with reference to the formulation.

17. The formulation according to any of the foregoing claims, comprising

    a) sodium dodecyl sulphate (SDS),
    b) sodium hydroxide (NaOH),
    c) n-propanol, and
    d) water.

**18.** The formulation according to claim 17, comprising

a) sodium dodecyl sulphate in an amount in the range of from 0.1% (w/v) to 0.3% (w/v), preferably 0.15% (w/v) to 0.25% (w/v), more preferably approximately 0.2% (w/v),
b) sodium hydroxide in an amount in the range of from 0.2% (w/v) to 0.4% (w/v), preferably 0.25% (w/v) to 0.35% (w/v), and more preferably approximately 0.3% (w/v) with reference to the formulation,
c) n-propanol in an amount in the range of from 10% (v/v) to 30% (v/v), preferably 15% (v/v) to 25% (v/v), more preferably approximately 20% (v/v) with reference to the formulation, and
d) water ad 100% (v/v).

**19.** The formulation according to claim 17, comprising

a) sodium dodecyl sulphate in an amount in the range of from 0.1 % (w/v) to 0.3% (w/v), preferably 0.15% (w/v) to 0.25% (w/v), more preferably approximately 0.2% (w/v),
b) sodium hydroxide in an amount in the range of from 0.2% (w/v) to 0.4% (w/v), preferably 0.25% (w/v) to 0.35% (w/v), and more preferably approximately 0.3% (w/v) with reference to the formulation,
c) n-propanol in an amount in the range of from 20% (v/v) to 40% (v/v), preferably 25% (v/v) to 35% (v/v), more preferably approximately 30% (v/v) with reference to the formulation, and
d) water ad 100% (v/v).

**20.** A kit comprising

a) a detergent,
b) an alkali hydroxide,
c) an alcohol, preferably having 1 to 4 C-atoms and optionally d) water.

**21.** The kit according to claim 20, wherein a) - c), and d), if present, are provided in separate containers.

**22.** The kit according to claim 20, wherein a) - c) and d), if present are provided in a ready-to-use-mixture.

**23.** The kit according to any of claims 20-22, wherein said detergent is as defined in any of claims 2-6, said alkali hydroxide is as defined in any of claims 7 - 10, and said alcohol, preferably having 1 to 4 C-atoms is as defined in any of claims 11-16.

**24.** Use of a kit according to any of claims 20-23 for preparing a formulation according to any of claims 1-19.

**25.** A method for prion decontamination and/or disinfection of an object or a surface thereof comprising:

a) contacting said object or said surface thereof by submerging or rinsing it in or with a formulation according to any of claims 1-19,
b) allowing said formulation to remain in contact with said object or said surface thereof by submerging or rinsing for a period and under conditions sufficient to decontaminate said object or said surface thereof of prions and to disinfect said object or said surface thereof of bacteria or viruses or vegetative forms of fungi, and
c) optionally followed by autoclaving or sterilising said object.

**26.** The method according to claim 25, wherein said period is from 1 min to 60 min and said conditions are a temperature in the range of from 5°C to 80°C, preferably 5°C to 50°C, more preferably 15°C to 30°C.

**27.** The method according to any of claims 25-26, wherein said decontamination of prions is a reduction of prion infectivity by at least a factor of 4 logs of the original infectivity, and said disinfection of bacteria or viruses is a reduction of bacterial or viral infectivity by at least a factor of 4 logs of the original infectivity.

**28.** The method according to any of claims 25-27, wherein said object originates from/belongs to the field of medicine, dental medicine, veterinary medicine, food production or -processing, agriculture or laboratory work and is preferably specified as a surgical instrument, diagnostic instrument, dental instrument, catheter, other medical device, operating room, cell culture, laboratory instrument, laboratory surface or a piece of these.

**29.** Use of a formulation according to any of claims 1-19 for prion decontaminating and/or disinfecting an object or a surface thereof.

**30.** A gel comprising a formulation according to any of claims 1-19.

**31.** The gel according to claim 30, which is a hydrogel.

Figure 1:

**Figure 2**:

**Figure 3:**

**Instrument Disinfection at 20° C**
**Fixating Effects / Blood**

Figure 4a

**Instrument Disinfection at 20° C**
**Fixating Effects / Blood**

| 0,2% / 0,3% | 0,2% / 0,3%<br>in 20% | 0,2% / 0,3%<br>in 20%<br>+ 20% | 4 M | Control |
|---|---|---|---|---|

| | 1 | 2 | 3 | 4 | 5 | 6 | 7 | 8 | 9 | 10 | -K |
|---|---|---|---|---|---|---|---|---|---|---|---|
| 20´ | | | | | | | | | | | |

| SDS / NaOH | SDS / NaOH<br>in n-Propanol | SDS / NaOH<br>in n-Propanol<br>+ Urea | Guanidine-<br>thiocyanat<br>Solution | Aqua bidest. |
|---|---|---|---|---|

Figure 4b

Instrument Disinfection at 20° C
Fixating Effects / Brain Homogenate 10%

Figure 4c

**European Patent Office**

## EUROPEAN SEARCH REPORT

Application Number

EP 07 02 3996

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2004/035719 A (RECKITT BENCKISER INC [US]; RECKITT BENCKISER UK LTD [GB]; LU ROBERT Z) 29 April 2004 (2004-04-29) * page 1, line 7 - page 4, line 18 * * page 5, line 4 - page 8, line 16 * * page 9, line 1 - page 15, line 15; claims 1-20; tables 1-6 * ----- | 1-31 | INV. A61L2/18 A01N25/30 A01N31/02 A01N59/00 C11D3/00 ADD. A61L101/02 A61L101/34 A61L101/44 |
| X | WO 00/71661 A (RECKITT BENCKISER INC [US]; RECKITT & COLMANN PROD LTD [GB]; HARRISON) 30 November 2000 (2000-11-30) * page 1, line 24 - page 2, line 25 * * page 5, line 3 - page 8, line 6 * * page 10, line 1 - page 11, line 4; claims 1-12; tables 1-4 * ----- | 1-31 | |
| X | US 4 678 658 A (CASEY IRENE [US] ET AL) 7 July 1987 (1987-07-07) * column 2, line 15 - column 3, line 47; claims 1,3-5; examples I-IV * ----- | 1-29 | |
| X | WO 00/30460 A (PROCTER & GAMBLE [US]; ROSELLE BRIAN JOSEPH [US]; WARD THOMAS EDWARD []) 2 June 2000 (2000-06-02) * page 1, line 29 - page 11, line 23 * * page 13, line 29 - page 14, line 25 * * page 15, line 6 - page 16, line 27 * * page 20, last line - page 22; examples F,H * ----- | 1-31 | TECHNICAL FIELDS SEARCHED (IPC) A61L A01N C11D |
| X | WO 99/00026 A (PROCTER & GAMBLE [US]; ROSELLE BRIAN JOSEPH [US]; WARD THOMAS EDWARD []) 7 January 1999 (1999-01-07) * page 2, line 2 - page 8, last line * * page 11, line 1 - page 11, paragraph FOUR * * page 12, line 3 - page 13, paragraph THREE; example G * ----- | 1-31 | |

-/--

| The present search report has been drawn up for all claims | | |
|---|---|---|
| Place of search | Date of completion of the search | Examiner |
| Munich | 9 June 2008 | Edmueller, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**European Patent Office**

**EUROPEAN SEARCH REPORT**

Application Number

EP 07 02 3996

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | DE 103 18 009 A1 (MENNO CHEMIE VERTRIEBSGES MBH [DE]) 18 November 2004 (2004-11-18) * paragraphs [0009] - [0013], [0039] - [0041]; examples 1-6; tables 1,2 * ----- | 1-31 | |
| Y,D | LEMMER ET AL: "Decontamination of surgical instruments from prion proteins: in vitro studies on the detachment, destabilization and degradation of PrPsc bound to steel surfaces" JOURNAL OF GENERAL VIROLOGY, SOCIETY FOR GENERAL MICROBIOLOGY, SPENCERS WOOD, GB, vol. 85, 1 January 2004 (2004-01-01), pages 3805-3816, XP009100547 ISSN: 0022-1317 * page 3808 - page 3814; table 1 * ----- | 1-31 | |
| A | US 2004/052833 A1 (PRUSINER STANLEY B [US] ET AL) 18 March 2004 (2004-03-18) * the whole document * ----- | 1-31 | |
| A | US 2005/202137 A1 (AWAD AZIZ C [US]) 15 September 2005 (2005-09-15) * the whole document * ----- | 1-31 | TECHNICAL FIELDS SEARCHED (IPC) |

The present search report has been drawn up for all claims

| Place of search | Date of completion of the search | Examiner |
|---|---|---|
| Munich | 9 June 2008 | Edmueller, Peter |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 2 070 552 A1**

## ANNEX TO THE EUROPEAN SEARCH REPORT
## ON EUROPEAN PATENT APPLICATION NO.

EP 07 02 3996

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2008

| Patent document cited in search report | | Publication date | Patent family member(s) | | Publication date |
|---|---|---|---|---|---|
| WO 2004035719 | A | 29-04-2004 | AU | 2003271939 A1 | 04-05-2004 |
| | | | EP | 1549727 A1 | 06-07-2005 |
| | | | GB | 2393910 A | 14-04-2004 |
| | | | US | 2006052264 A1 | 09-03-2006 |
| WO 0071661 | A | 30-11-2000 | AT | 265520 T | 15-05-2004 |
| | | | AU | 768691 B2 | 08-01-2004 |
| | | | AU | 4933800 A | 12-12-2000 |
| | | | BR | 0010813 A | 12-03-2002 |
| | | | CA | 2372895 A1 | 30-11-2000 |
| | | | CN | 1351648 A | 29-05-2002 |
| | | | DE | 60010251 D1 | 03-06-2004 |
| | | | DE | 60010251 T2 | 28-04-2005 |
| | | | EP | 1179039 A1 | 13-02-2002 |
| | | | ES | 2215661 T3 | 16-10-2004 |
| | | | GB | 2353043 A | 14-02-2001 |
| | | | MX | PA01011791 A | 14-05-2002 |
| | | | PL | 351588 A1 | 05-05-2003 |
| | | | US | 2002119902 A1 | 29-08-2002 |
| | | | ZA | 200109515 A | 19-11-2002 |
| US 4678658 | A | 07-07-1987 | NONE | | |
| WO 0030460 | A | 02-06-2000 | AU | 2148700 A | 13-06-2000 |
| | | | BR | 9915529 A | 31-07-2001 |
| | | | CA | 2349288 A1 | 02-06-2000 |
| | | | CN | 1337853 A | 27-02-2002 |
| | | | EG | 22221 A | 31-10-2002 |
| | | | EP | 1128734 A1 | 05-09-2001 |
| | | | JP | 2002530097 T | 17-09-2002 |
| | | | TR | 200101372 T2 | 21-12-2001 |
| WO 9900026 | A | 07-01-1999 | AT | 283644 T | 15-12-2004 |
| | | | AT | 301403 T | 15-08-2005 |
| | | | AU | 8169798 A | 19-01-1999 |
| | | | AU | 8169898 A | 19-01-1999 |
| | | | BR | 9810339 A | 05-09-2000 |
| | | | BR | 9810935 A | 26-09-2000 |
| | | | CA | 2295124 A1 | 07-01-1999 |
| | | | CA | 2295125 A1 | 07-01-1999 |
| | | | CN | 1268873 A | 04-10-2000 |
| | | | CN | 1268874 A | 04-10-2000 |
| | | | DE | 69827944 D1 | 05-01-2005 |
| | | | DE | 69827944 T2 | 24-11-2005 |
| | | | DE | 69831151 D1 | 15-09-2005 |
| | | | DE | 69831151 T2 | 08-06-2006 |

EPO FORM P0459

For more details about this annex : see Official Journal of the European Patent Office, No. 12/82

44

## ANNEX TO THE EUROPEAN SEARCH REPORT
## ON EUROPEAN PATENT APPLICATION NO.

EP 07 02 3996

This annex lists the patent family members relating to the patent documents cited in the above-mentioned European search report.
The members are as contained in the European Patent Office EDP file on
The European Patent Office is in no way liable for these particulars which are merely given for the purpose of information.

09-06-2008

| Patent document cited in search report | | Publication date | Patent family member(s) | | Publication date |
|---|---|---|---|---|---|
| WO 9900026 | A | | EP | 0991327 A1 | 12-04-2000 |
| | | | EP | 0991328 A1 | 12-04-2000 |
| | | | ES | 2234127 T3 | 16-06-2005 |
| | | | ES | 2247701 T3 | 01-03-2006 |
| | | | HU | 0003605 A2 | 28-05-2001 |
| | | | HU | 0004533 A2 | 28-04-2001 |
| | | | ID | 28185 A | 10-05-2001 |
| | | | ID | 25912 A | 09-11-2000 |
| | | | JP | 2002507236 T | 05-03-2002 |
| | | | JP | 3919828 B2 | 30-05-2007 |
| | | | JP | 2002511758 T | 16-04-2002 |
| | | | MA | 24577 A1 | 31-12-1998 |
| | | | TR | 9903224 T2 | 21-07-2000 |
| | | | TR | 9903231 T2 | 21-07-2000 |
| | | | WO | 9900025 A1 | 07-01-1999 |
| DE 10318009 | A1 | 18-11-2004 | NONE | | |
| US 2004052833 | A1 | 18-03-2004 | US | 2004127558 A1 | 01-07-2004 |
| | | | US | 2004127559 A1 | 01-07-2004 |
| US 2005202137 | A1 | 15-09-2005 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Non-patent literature cited in the description

- **Prusiner, S. B.** *Science,* 1982, vol. 216, 136-144
- **Prusiner, S. B.** *Proc Natl Acad Sci USA,* 1998, vol. 95, 13363-13383
- **Wadsworth, J. D. F. ; Joiner, S. ; Hill, A. F. ; Campbell, T. A. ; Desbruslais, M. ; Luthert, P. J. ; Collinge, J.** *Lancet,* 2001, vol. 358, 171-180
- **Beekes, M. B. ; McBride, P.A.** *FEBS Journal,* 2007, vol. 274, 588-605
- In Prions. A Challenge for Science, Medicine and the Public Health System. **Beekes, M. ; Mielke, M. ; Pauli, G. ; Baier, M. ; Kurth, R.** Contributions to Microbiology. 2004, vol. 11, 117-135
- **Llewelyn, C. A. ; Hewitt, P. E. ; Knight, R. S. ; Amar, K. ; Cousens, S. ; Mackenzie, J. ; Will, R. G.** *Lancet,* 2004, vol. 363, 411-412
- **Brown, P. ; Preece, M. ; Brandel, J. P.** Iatrogenic Creutzfeldt-Jakob disease at the millennium. *Neurology,* 2000, vol. 55, 1075-1081
- **Simon, D. ; Pauli, G.** *Bundesgesundheitsblatt,* 1998, vol. 7, 297-285
- **Sehulster, L. M.** *Infect Control Hosp Epidemiol,* 2004, vol. 25, 276-297
- **Glatzel, M. ; Abela, E. ; Maissen, M. ; Aguzzi, A.** *N Engl J Med,* 2003, vol. 349, 1812-1820
- **Hilton, D. A. ; Fathers, E ; Edwards, P. ; Ironside, J. W. ; Zajicek, J.** *Lancet,* 1998, vol. 352, 703-704
- **Hilton, D. A. ; Ghani, A. C. ; Conyers, L ; Edwards, P. ; McCardle, L. ; Penney, M. ; Ritchie, D. ; Ironside, J. W.** *BMJ,* 2002, vol. 325, 633-634
- **Hörnlimann, B. ; Pauli, G. ; Harbarth, S. ; Widmer, H.-R. ; Simon, D.** Prionen und Prionenkrankheiten. 2001, 415-442
- **Lemmer et al.** *Journal of General Virology,* 2004, vol. 85, 3805-3816
- **Kascsak, R.J. ; Rubenstein, R. ; Merz, P.A. ; Tonna-Demasi, M ; Fersko, R. ; Carp., R.I. ; Wisniewski, H.M. ; Diringer, H.** *J. Virol.,* 1987, vol. 61, 3688-3693
- **Yan, Z.X. ; Stitz, L. ; Heeg, P. ; Pfaff, E. ; Roth, K.** *Infect Control Hosp Epidemiol,* 2004, vol. 25, 280-283
- **Bonin, O.** Quantitativ-virologische Methoden. Georg Thieme Verlag, 1973, 183-186

- **Baxter R. L. ; Baxter, H. C. ; Campbell, G.A. ; Grant, K. ; Jones, A. ; Richardson, P. ; Whittaker, G.** Quantitative analysis of residual protein contamination on reprocessed surgical instruments. *J Hosp Infect,* 2006, vol. 63, 439-444
- **Beekes, M. ; Baldauf, E. ; Caßens, S. ; Diringer, H. ; Keyes, P. ; Scott, A. C. ; Wells, A. H. ; Brown, P. ; Gibbs, C. J. Jr. ; Gajdusek, D. C.** Western blot mapping of disease-specific amyloid in various animal species and humans with transmissible spongiform encephalopathies using a high-yield purification method. *J Gen Virol,* 1995, vol. 76, 2567-2576
- **Beekes, M. ; Baldauf, E. ; Diringer, H.** Sequential appearance and accumulation of pathognomonic markers in the central nervous system of hamsters orally infected with scrapie. *J Gen Virol,* 1996, vol. 77, 1925-1934
- **Bertram, J. ; Mielke, M. ; Beekes, M. ; Lemmer, K. ; Baier, M. ; Pauli, G.** Inactivation and removal of prions in producing medical products. A contribution to evaluation and declaration of possible methods. *Bundesgesundheitsblatt Gesundheitsforschung Gesundheitsschutz,* 2004, vol. 47, 36-40
- **Kascsak, R.J. ; Rubenstein, R. ; Merz, P.A. ; Tonna-Demasi, M ; Fersko, R. ; Carp., R.I. ; Wisniewski, H.M. ; Diringer, H.** Mouse polyclonal and monoclonal antibody to scrapie-associated fibril protein. *J Virol,* 1987, vol. 61, 3688-3693
- **Lemmer, K. ; Mielke, M ; Pauli, G. ; Beekes, M.** Decontamination of surgical instruments from prion proteins: in vitro studies on the detachment, destabilization and degradation of PrPSc bound to steel surfaces. *J Gen Virol,* 2004, vol. 85, 3805-3816
- **Saa, P. ; Castilla, J. ; Soto, C.** Presymptomatik detection of prions in blood. *Science,* 2006, vol. 313, 92-94
- **Schulz-Schaeffer, W. J. ; Tschoke, S. ; Kranefuss, N. ; Drose, W. ; Hause-Reitner, D. ; Giese, A. ; Groschup, M. H. ; Kretzschmar, H. A.** The paraffin-embedded tissue blot detects PrP(Sc) early in the incubation time in prion diseases. *Am J Pathol,* 2000, vol. 156, 51-56
- **Thomzig, A. ; Kratzel, C. ; Lenz, G. ; Krüger, D. ; Beekes, M.** Widespread PrPSc accumulation in muscels of hamsters orally infected with scrapie. *EMBO reports,* 2004, vol. 4, 530-533

- **Yan, Z.X. ; Stitz, L. ; Heeg, P. ; Pfaff, E. ; Roth, K.** Infectivity of prion protein bound to stainless steel wires: a model for testing decontamination procedures for transmissible spongiform encephalopathies. *Infect Control Hosp Epidemiol,* vol. 25, 280-283

- **Lemmer, K. ; Mielke, M. ; Pauli, G. ; Beekes, M.** Decontamination of surgical instruments from prion proteins: in vitro studies on the detachment, destabilization and degradation of PrPSc bound to steel surfaces. *J Gen Virol,* 2004, vol. 85, 3805-3816
- **Thomzig, A. ; Kratzel, C. ; Lenz, G. ; Krüger, D. ; Beekes, M.** Widespread PrPSc accumulation in muscels of hamsters orally infected with scrapie. *EMBO reports,* 2003, vol. 4, 530-533